# EUROPEAN PATENT APPLICATION

(11) **EP 4 845 083 A1**
(43) Date of publication of application: **25.11.2026**
(21) Application number: 25778028.8
(22) Date of filing: 10.02.2025
(51) Int. Cl.: H04L 5/00

(54) **COMMUNICATION METHOD AND APPARATUS**

(30) Priority: 28.03.2024 CN 202410378519
(71) Applicant: Huawei Technologies Co., Ltd., Shenzhen, Guangdong 518129 (CN)
(72) Inventor: WEI, Xiuhong, Shenzhen, Guangdong 518129 (CN); LI, Xueru, Shenzhen, Guangdong 518129 (CN); HE, Hongli, Shenzhen, Guangdong 518129 (CN)
(74) Representative: Thun, Clemens
(86) International application number: PCT/CN2025/076649
(87) International publication number: WO 2025/200801

(57) **Abstract**

A communication method and apparatus are provided. The method may be applied to scenarios such as sensing, communication, and positioning. In the method, a first sequence used to generate a reference signal is determined based on a second sequence, a value set, and an index set. The second sequence includes the first sequence. A value in the value set is used to determine a length of the first sequence or a channel quantity of the first sequence, an index in the index set is used to determine a start position of the first sequence in the second sequence, and the first sequence can be obtained by truncating the second sequence based on the value in the value set and the index in the index set. Because a transceiving end truncates a long sequence or a multi-channel sequence based on a value in the value set and an index in the index set, the value in the value set and the index in the index set can be properly designed, so that the sequence obtained by truncating the long sequence or the multi-channel sequence based on the value and the index still has a good correlation characteristic.

## Description

This application claims priority to Chinese Patent Application No. 202410378519.7, filed with the China National Intellectual Property Administration on March 28, 2024 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In a sensing scenario, a transmitting device sends a reference signal (also referred to as a sensing signal) to the surrounding environment by radiating electromagnetic waves. A receiving device receives the reference signal reflected by the surrounding environment, and analyzes and compares the reference signal with a local sequence to sense related information of the surrounding environment, for example, whether there is a to-be-detected target in the environment, a quantity of targets, and a position of each target.

A length of a sequence used to generate the reference signal is related to the bandwidth actually occupied by the reference signal. A larger bandwidth indicates higher sensing resolution or sensing precision. However, different sensing devices usually support different bandwidth capabilities, or different sensing services have different requirements on sensing resolution, thereby imposing different bandwidth requirements. In other words, different devices may require sequences of different lengths to generate reference signals.

Currently, sensing devices usually directly truncate a short sequence of the required length from a long sequence, and generates a reference signal based on the truncated short sequence. However, such truncation may degrade the correlation performance of the truncated short sequence.

### SUMMARY

This application provides a communication method and apparatus to improve the correlation performance of a sequence obtained by truncating a long sequence or a multi-channel sequence.

According to a first aspect, a communication method is provided. The method may be performed by a communication apparatus, or may be performed by a module (for example, a processor, a chip, or a chip system) used in the communication apparatus, or may be performed by a logical node, a logical module, or software that can implement all or some of functions of the communication apparatus. The communication apparatus may be a first communication apparatus or a second communication apparatus. The first communication apparatus is a reference signal sender, and the second communication apparatus is a reference signal receiver. The method includes: determining a first value and a first index; and sending or receiving a first signal, where the first signal is generated based on a first sequence. The first value is used to determine a length of the first sequence or a channel quantity of the first sequence, the first index is used to determine a start position of the first sequence in a second sequence, and the second sequence includes the first sequence. In addition, the first value belongs to a value set, and the first index belongs to an index set associated with the first value.

Based on this solution, because a transceiving end truncates a long sequence or a multi-channel sequence based on a value in the value set and an index in the index set, the value in the value set and the index in the index set can be properly designed, so that the sequence obtained by truncating the long sequence or the multi-channel sequence based on the value and the index still has a good correlation characteristic. In addition, when the value set and the index set include a plurality of elements, sequences of different lengths or different channel quantities can be obtained based on different values and indexes, to meet sensing devices/sensing services having different bandwidth, delay, and coverage requirements.

In a possible design, the first value is the length of the first sequence, the value set is a length set, an index set associated with a value in the value set is an element index set, and the first value is less than or equal to a length of the second sequence; or the first value is the channel quantity of the first sequence, the value set is a channel quantity set of a multi-channel sequence, an index set associated with a value in the value set is a channel index set of the multi-channel sequence, and the first value is less than or equal to a channel quantity of the second sequence.

In a possible design, the multi-channel sequence includes a plurality of sequences, and a correlation of the multi-channel sequence is a superimposition of correlations performed separately on the plurality of sequences; and a channel quantity of the multi-channel sequence is a quantity of sequences included in the multi-channel sequence, and/or a quantity of segments for performing correlation on the multi-channel sequence.

Based on the foregoing two possible designs, when the value set is a length set, the value set may be used to truncate a long sequence; or when the value set is a channel quantity set of a multi-channel sequence, the value set may be used to truncate the multi-channel sequence into a multi-channel sequence of a smaller channel quantity. That is, this solution can be applied to a plurality of scenarios to meet bandwidth and delay requirements of different devices or services, thereby improving sensing performance.

In a possible design, the value set includes at least one or at least two values, each of the at least two values is associated with one index set, and the index set includes at least one index. For example, when the value set does not include the length or the channel quantity of the second sequence, the value set includes at least one value. When the value set includes the length or the channel quantity of the second sequence, the value set includes at least two values, and the at least two values include the length or the channel quantity of the second sequence.

Based on this possible design, in addition to the length or the channel quantity of the second sequence, the value set includes at least one value, so that the transceiving end can obtain sequences of different lengths or different channel quantities based on different values and indexes, thereby meeting sensing devices/sensing services having different bandwidth, delay, and coverage requirements.

In a possible design, the value set includes a base value, each value in the value set is an integer multiple of the base value; and/or each index in the index set is a non-negative integer multiple of the base value; and the base value is a positive integer.

Based on this possible design, when the value set or the index set is configured, the base value may be configured in a unified manner, and then a related multiple corresponding to a value or an index is configured, thereby reducing signaling overheads.

In a possible design, the value set and the index set associated with the value in the value set meet at least one of the following: there is no intersection between index sets associated with different values in the value set; an element in the index set associated with the value in the value set includes *Cᵢ* × *Xᵢ*, where *Xᵢ* is a sequence length or a channel quantity indicated by an *i*^{th} element in the value set, ${C}_{i} = 0 , 1 , … , \left⌊\frac{X}{{X}_{i}}\right⌋ - 1$, *X* is the length of the second sequence or the channel quantity of the second sequence, *i* = 1,2 ... , *N*, *N* is a total quantity of values included in the value set, and 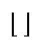 represents rounding down; or the value set includes the base value and a second value, there is no intersection between an index set associated with the second value and an index set associated with the base value, and the base value is a positive integer.

Based on this possible design, different sequences obtained by truncating the second sequence from different positions do not overlap each other, thereby ensuring the correlation performance of each truncated sequence. Alternatively, a sequence whose length is the base value does not overlap a sequence whose length is the second value, thereby ensuring the correlation performance of the sequences of the two lengths.

In a possible design, the first value is further used to determine a length of a first resource, and the first index is further used to determine a start position of the first resource. In this scenario, the sending or receiving the first signal includes: sending or receiving the first signal on the first resource.

Based on this possible design, the transceiving end may determine the first resource based on the first value and the first index, and does not need to schedule a resource by using additional signaling to send the first signal, thereby reducing signaling overheads.

In a possible design, a quantity of frequency domain resource units included in the first resource is the first value.

In a possible design, an index of a starting frequency domain resource unit of the first resource is the first index; or an index of a starting frequency domain resource unit of the first resource is a product of the first index and a comb size, and the comb size is a positive integer greater than 1.

Based on the foregoing two possible designs, a frequency domain position of the first resource can be determined. In addition, in a case that devices in a system have a unified understanding of a mapping relationship between values, indexes, and frequency domain resources, when sequences obtained by truncating different sequences in a same sequence set are sent on a same time-frequency resource, a plurality of truncated sequences may have a good cross-correlation characteristic.

In a possible design, the length of the first sequence is the first value; and an index of a 1^{st} element of the first sequence in the second sequence is the first index.

In a possible design, a quantity of time units included in the first resource is the first value.

In a possible design, an index of a starting time unit of the first resource satisfies: *P'* = *t*%*K*, where *t* is the index of the starting time unit of the first resource, *K* is the channel quantity of the second sequence, *P'* is the first index, and % represents a modulo operation.

Based on the foregoing two possible designs, a time domain position of the first resource can be determined. In addition, in a case that devices in a system have a unified understanding of a mapping relationship between values, indexes, and time domain resources, when sequences obtained by truncating different sequences in a same sequence set are sent on a same time domain resource, a plurality of truncated sequences may have a good cross-correlation characteristic.

In a possible design, a quantity of frequency domain resource units included in the first resource is a product of the first value and the length of the second sequence, and the length of the second sequence is a length of any channel sequence included in the second sequence.

In a possible design, an index of a starting frequency domain resource unit of the first resource is a product of the first index and the length of the second sequence; or an index of a starting frequency domain resource unit of the first resource is a product of the first index, the length of the second sequence, and a comb size, and the comb size is a positive integer greater than 1.

In a possible design, the channel quantity of the first sequence is the first value; and a channel index of a 1^{st} channel sequence of the first sequence in the second sequence is the first index.

In a possible design, the method further includes: receiving first information, where the first information indicates at least one of the following: the value set, the index set associated with the value in the value set, the second sequence, or a sequence set, where the second sequence belongs to the sequence set.

In a possible design, the method further includes: receiving second information, where the second information indicates the first value and/or the first index.

In a possible design, the second information includes the first value and/or the first index.

In a possible design, the second information includes an index of the first value in the value set, and/or an index of the first index in the index set associated with the first value.

Based on this possible design, the index of the first value in the value set indicates the first value, and the index of the first index in the index set associated with the first value indicates the first index, so that signaling overheads can be reduced.

According to a second aspect, a communication apparatus is provided, configured to implement various methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions. The communication apparatus may be the communication apparatus in the first aspect, or an apparatus included in the communication apparatus, for example, a chip or a chip system, or an apparatus including the communication apparatus.

In some possible designs, the communication apparatus may include a processing module and a transceiver module. The processing module may be configured to implement a processing function in any one of the foregoing aspect and the possible implementations of the foregoing aspect. The transceiver module may include a receiving module and a sending module that are respectively configured to implement a receiving function and a sending function in any one of the foregoing aspect and the possible implementations of the foregoing aspect.

In some possible designs, the transceiver module may include a transceiver circuit, a transceiver machine, a transceiver, or a communication interface.

According to a third aspect, a communication apparatus is provided, including a processor and a memory. The memory is configured to store computer instructions. When the processor executes the instructions, the communication apparatus is caused to perform the method according to any one of the aspects. The communication apparatus may be the communication apparatus in the first aspect, or an apparatus included in the communication apparatus, for example, a chip or a chip system, or an apparatus including the communication apparatus.

According to a fourth aspect, a communication apparatus is provided, including a processor and a communication interface. The communication interface is configured to communicate with a module outside the communication apparatus; and the processor is configured to execute a computer program or instructions, to cause the communication apparatus to perform the method according to any one of the aspects. The communication apparatus may be the communication apparatus in the first aspect, or an apparatus included in the communication apparatus, for example, a chip or a chip system, or an apparatus including the communication apparatus.

According to a fifth aspect, a communication apparatus is provided, including at least one processor. The processor is configured to execute a computer program or instructions stored in a memory, to cause the communication apparatus to perform the method according to any one of the aspects. The memory may be coupled to the processor, or may be independent of the processor. The communication apparatus may be the communication apparatus in the first aspect, or an apparatus included in the communication apparatus, for example, a chip or a chip system, or an apparatus including the communication apparatus.

According to a sixth aspect, a communication apparatus is provided (for example, the communication apparatus may be a chip or a chip system). The communication apparatus includes a processor configured to implement functions in any one of the first aspect or the second aspect. The communication apparatus may be the communication apparatus in the first aspect, or an apparatus included in the communication apparatus, for example, a chip or a chip system, or an apparatus including the communication apparatus.

In some possible designs, the communication apparatus includes a memory, and the memory is configured to store necessary program instructions and data.

In some possible designs, when the apparatus is a chip system, the apparatus may include a chip, or may include a chip and another discrete component.

According to a seventh aspect, a communication apparatus is provided. The communication apparatus may be the communication apparatus in the first aspect, or may be a module or unit (for example, a chip, a chip system, or a circuit) that is in the communication apparatus and that is in one-to-one correspondence with the method/operation/step/action described in the first aspect, or a module or unit that can be used together with the communication apparatus.

It may be understood that when the communication apparatus provided in any one of the second aspect to the seventh aspect is a chip, a sending action/function of the communication apparatus may be understood as outputting information, and a receiving action/function of the communication apparatus may be understood as inputting information.

According to an eighth aspect, a computer-readable storage medium is provided. The computer-readable storage medium stores a computer program or instructions; and when the computer program or the instructions are run on a communication apparatus, the communication apparatus is caused to perform the method according to the first aspect.

According to a ninth aspect, a computer program product including instructions is provided. When the computer program product runs on a communication apparatus, the communication apparatus is caused to perform the method according to the first aspect.

For technical effects brought by any design manner in the third aspect to the ninth aspect, refer to technical effects brought by different design manners in the first aspect. Details are not described herein again.

### BRIEF DESCRIPTION OF DRAWINGS

FIG. 1 is a diagram of a structure of a communication system according to this application;
FIG. 2 is a schematic flowchart of a communication method according to this application;
FIG. 3 to FIG. 7b are diagrams of sequence truncation according to this application;
FIG. 8 to FIG. 11 are diagrams of a mapping relationship between sequences and resources according to this application;
FIG. 12a to FIG. 12c are diagrams of a mapping manner of a multi-channel sequence according to this application;
FIG. 13 and FIG. 14 are schematic flowcharts of a communication method according to this application; and
FIG. 15 to FIG. 17 are diagrams of a structure of a communication apparatus according to this application.

### DESCRIPTION OF EMBODIMENTS

In descriptions of this application, unless otherwise stated, "/" indicates an "or" relationship between associated objects. For example, A/B may indicate A or B. "And/or" in this application describes only an association relationship for describing the associated objects and indicates that three relationships may exist. For example, A and/or B may indicate the following three cases: Only A exists, both A and B exist, and only B exists, where A and B may be singular or plural.

In the descriptions of this application, unless otherwise stated, "a plurality of" means two or more than two. "At least one item (piece) of the following" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be singular or plural

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when", "in a case", and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on requirements. Correspondingly, the apparatus provided in embodiments of this application may also correspondingly implement these features or functions. Details are not described herein.

In this application, unless otherwise stated, for same or similar parts in embodiments, refer to each other. In embodiments of this application, unless otherwise stated or a logical conflict occurs, terms and/or descriptions in different embodiments are consistent and may be referenced by each other, and different embodiments may be combined based on internal logical relationships between the embodiments to form a new embodiment. The following implementations of this application do not constitute a limitation on the protection scope of this application.

Wireless sensing is an important technology in the future. In wireless sensing, a transmitting device may send a reference signal (which may also be referred to as a sensing signal or the like) to the surrounding environment by radiating electromagnetic waves, and a receiving device may receive a signal (which is referred to as a received signal) that is of the reference signal and that is reflected by the surrounding environment. Then, the receiving device may compare an association relationship between the received signal and the reference signal to sense related information of the surrounding environment. For example, whether there is a to-be-detected or to-be-sensed object in the surrounding environment, a distance between a scatterer and a transceiver device, an orientation or an angle of the scatterer relative to the transceiver device, and a moving speed of the scatterer relative to the transceiver device are analyzed.

Wireless sensing may be widely applied to various fields. For example, in a vehicle-to-everything scenario, a vehicle may obtain, through wireless sensing, information about the surrounding environment, for example, position information and speed information of a moving object like another vehicle or a pedestrian, and information about a relatively static object like a road surface or a fence. For another example, in an environment like an airport, a special device may be deployed to sense and monitor a flying object like an unmanned aerial vehicle, so that another flying object does not cause security impact on take-off and landing of an aircraft. For another example, in a home environment, intruder detection may be performed through wireless sensing, to improve security and privacy of the home environment.

A sensing mode may include a self-sending and self-receiving sensing mode and a self-sending and other-receiving sensing mode. In the self-sending and self-receiving sensing mode, the transmitting device and the receiving device are the same device. For example, a single base station may implement a sensing function in a self-sending and self-receiving manner, and a single user equipment (user equipment, UE) may also implement sensing in a self-sending and self-receiving manner. In the self-sending and other-receiving sensing mode, the transmitting device and the receiving device are different devices. For example, one of the transmitting device and the receiving device is a base station, and the other is a UE, or the transmitting device and the receiving device are two different base stations, or the transmitting device and the receiving device are two different UEs.

The reference signal sent by the transmitting device is generated based on a sequence. To ensure good sensing performance, a sequence used to generate a reference signal needs to have a good autocorrelation characteristic. In addition, during actual application, multiple pairs/multiple devices may perform sensing simultaneously. In this case, interference exists between different devices. For example, a UE A and a UE C occupy a same time-frequency resource to separately send a reference signal to a UE B and a UE D for sensing. However, in addition to receiving the reference signal from the UE A, the UE B is also interfered with by the reference signal from the UE C. Similarly, in addition to receiving the reference signal from the UE C, the UE D also receives the reference signal from the UE A. Therefore, to reduce interference, sequences used to generate different reference signals need to have a good cross-correlation characteristic.

Autocorrelation refers to a correlation operation between a sequence and the sequence itself, and cross-correlation refers to a correlation operation between two different sequences. The correlation operation may be understood as a processing process between two sequences, and includes multiplication and addition operations between different elements of the two sequences. The correlation operation includes a periodic correlation operation and an aperiodic correlation operation.

Periodic correlation operation: When a correlation operation is performed on sequences, a correlation value between two sequences is calculated based on a relative cyclic shift between the sequences. If a sequence length is *L,* the relative cyclic shift *τ* between the sequences may be: *-L, -L* + 1, *-L* + 2, ..., -1,0,1, ... , *L* - 2, *L - 1,* 2L cases in total. Therefore, the periodic correlation operation of the sequences has a total of 2L values. Because the correlation operation is performed based on the cyclic shift, a correlation operation result presents periodicity (a period is the sequence length *L),* that is, a correlation operation result of *τ* = 0,1, ... , *L -* 1 is the same as a correlation operation result of *τ* = *-L + 1,* ..., -1,0.

Aperiodic correlation operation: When a correlation operation is performed on sequences, a correlation value between overlapping elements in two sequences is calculated based on a relative shift between the sequences.

It may be understood that, for two sequences, if a cyclic shift occurs on one of the two sequences during a relative shift, enabling a quantity of overlapping elements in the two sequences to be always equal to a sequence length, a correlation operation on the two sequences is a periodic correlation operation. If no cyclic shift occurs during a relative shift, in other words, a quantity of overlapping elements in the two sequences decreases as the relative shift increases, a correlation operation on the two sequences is an aperiodic correlation operation.

A good autocorrelation characteristic may be understood as that, in an autocorrelation operation result of a sequence, in addition to a shift of 0 (that is, *τ* = 0), other shifts (that is, *τ* ≠ 0) are all 0 as much as possible. A good cross-correlation characteristic may be understood as that a cross-correlation operation result is always 0 as much as possible when *τ* = 0,1, *...,L* - 1. In addition, when a Doppler shift is considered, autocorrelation of a sequence may also be referred to as self-ambiguity, and cross-correlation between sequences may also be referred to as cross-ambiguity.

Currently, sequences used to generate a reference signal include an M sequence, a Gold sequence, a Zadoff-Chu (ZC) sequence, and the like. The foregoing sequences are obtained in a parsing and construction manner, and cross-correlation between the sequences is poor. In addition, when a to-be-sensed target is in a high-speed moving state, there is a Doppler shift between a reference signal received by the receiving device and a reference signal sent by the transmitting device. As a result, a phase of the received reference signal rotates. In this case, the correlation performance of the foregoing sequences also deteriorates.

In addition to the parsing and construction manner, a sequence having a good correlation characteristic may also be obtained in a computer search manner, for example, a sequence having good autocorrelation and cross-correlation characteristics is trained in an artificial intelligence (artificial intelligence, AI) manner. Further, impact of Doppler may be further considered, and a sequence that can resist a Doppler shift is searched for.

The M sequence, the Gold sequence, and the ZC sequence may be understood as single-channel sequences. In addition, a multi-channel sequence may also be designed. A multi-channel sequence may be understood as a sequence group including a plurality of sequences. The plurality of sequences have a same length, and a total length of the multi-channel sequence is a sum of lengths of the plurality of sequences. For ease of description in the following, a length of any sequence included in a multi-channel sequence is referred to as a length of the multi-channel sequence. That is, the length of the multi-channel sequence is understood as the length of any sequence included in the multi-channel sequence, and a total length of the multi-channel sequence is understood as a sum of lengths of a plurality of sequences included in the multi-channel sequence. In addition, a quantity of the plurality of sequences included in the multi-channel sequence is referred to as a channel quantity of the multi-channel sequence below. One of the plurality of sequences may be referred to as a channel sequence.

A correlation of the multi-channel sequence may be understood as a superimposition of correlations performed separately on channel sequences of the multi-channel sequence. Correlation sidelobes of the channel sequences may cancel each other to achieve good correlation characteristics. For example, a K-channel sequence whose length of a channel sequence is L includes *L* × *K* elements in total, and may be represented as: $\left[\left[{X}_{0 , 0},{X}_{1 , 0},{X}_{2 , 0},…,{X}_{L - 1 , 0}\right],… …,\left[{X}_{0 , k},{X}_{1 , k},{X}_{2 , k},…,{X}_{L - 1 , k}\right],… …,\left[{X}_{0 , K - 1},{X}_{1 , K - 1},{X}_{2 , K - 1},…,{X}_{L - 1 , K - 1}\right]\right]$

K represents a channel quantity, a correlation operation between a channel sequence *k* and the channel sequence *k* is referred to as autocorrelation of the channel sequence *k,* and an autocorrelation result may be represented as ${R}_{k} \left[τ\right] = {\sum }_{l = 0}^{L - 1} {x}_{l , k} {x}_{\left(l+τ\right) %L , k}^{∗}$, where *τ* = *0,1, ..., L - 1. x_{l,k}* represents an *l*^{th} element in the channel sequence *k,* ${x}_{\left(l+τ\right) %L , k}^{∗}$ represents a conjugate of an (*l* + *τ*) %*L*^{th} element of the channel sequence *k,* % represents a modulo operation, * represents a conjugate operation, and *τ* represents a shift value. Therefore, an autocorrelation result of the K-channel sequence whose length of the channel sequence is L may be represented as $R \left[τ\right] = {\sum }_{k = 0}^{K - 1} {R}_{k} \left[τ\right]$.

Similarly, a cross-correlation result of two multi-channel sequences [*x_{l.k}*,] and [*y_{l.k},*] may be represented as ${R}^{x , y} \left[τ\right] = {\sum }_{k = 0}^{K - 1} {R}_{k}^{x , y} \left[τ\right] = {\sum }_{k = 0}^{K - 1} {\sum }_{l = 0}^{L - 1} {x}_{l , k} {y}_{\left(l+τ\right) %L , k}^{∗}$.

It may be understood that, for a sequence whose total length is L × *K,* if a correlation of the sequence is a superimposition of correlations performed separately on K subsequences whose length is *L* of the sequence, the sequence may be used as a *K*-channel sequence, where a length of each channel sequence is *L*. That is, if a sequence whose total length is *L* × *K* is divided into *K* subsequences whose length is *L*, correlation processing is performed on each subsequence, correlation results of the plurality of subsequences are superimposed, and a superimposed correlation result is used as a correlation result of the sequence whose total length is *L* × *K*, the sequence whose total length is *L* × *K* may be understood as a *K*-channel sequence. In this case, a quantity of the multi-channel sequence may also be understood as a quantity of segments of the sequence for performing correlation on the sequence whose total length is *L* × *K*.

In other words, the multi-channel sequence in this application meets at least the following two features: (1) The multi-channel sequence includes a plurality of sequences (also referred to as channel sequences or subsequences). (2) The correlation of the multi-channel sequence is a superimposition of correlations performed separately on the plurality of sequences included in the multi-channel sequence.

It should be noted that the multi-channel sequence in embodiments of this application may also have another name, for example, a sequence group; each sequence of the multi-channel sequence may also have another name, for example, a subsequence or a segment sequence; and a channel quantity of a sequence may also have another name, for example, a segment quantity or a subsequence quantity. A name of the multi-channel sequence, a name of any sequence of the multi-channel sequence, and a name of the channel quantity are not specifically limited in this application.

Usually, a larger bandwidth occupied by a reference signal indicates higher sensing resolution or sensing precision. Different devices usually support different bandwidth capabilities, or different sensing services require different sensing resolution or sensing precision, thereby imposing different bandwidth requirements. For example, a sensing service that has a low requirement on sensing resolution or sensing precision does not need to occupy a large bandwidth, and a sensing service that has a high requirement on sensing resolution or sensing precision needs to occupy a large bandwidth. In other words, different devices may require sequences of different lengths to generate reference signals occupying different bandwidths.

Currently, a device usually truncates, based on a required sequence length, a short sequence of the required length from a 31-order Gold sequence whose length is 2³¹ - 1, and generates a reference signal based on the truncated short sequence. The Gold sequence is used to generate a positioning reference signal (positioning reference signal, PRS) or a sidelink positioning reference signal (sidelink PRS, SL-PRS). However, such truncation may degrade the correlation performance of the truncated short sequence, affecting sensing performance.

In addition, for a multi-channel sequence, because a correlation of the multi-channel sequence is a superimposition of correlations performed separately on channel sequences, different channel sequences cannot interfere with each other, and need to be sent on different time-frequency resources, for example, different channel sequences are sent on different time units. As a channel quantity increases, a degree of freedom of sequence design is greater, the correlation performance is better, and sensing precision is expected to be improved. However, a larger channel quantity indicates more time domain resources required for sending sequences, and a longer delay. Different sensing services may have different precision or delay requirements, and may require different channel quantities.

In other words, different devices may require multi-channel sequences of different channel quantities to generate reference signals occupying different quantities of time-frequency resources. In this scenario, if a part of channel sequences of a multi-channel sequence are freely truncated as a new multi-channel sequence, the correlation performance of the part of channel sequences may deteriorate.

Based on this, this application provides a communication method. In the method, a first sequence used to generate a reference signal is determined based on a second sequence, a value set, and an index set. The second sequence includes the first sequence. A value in the value set is used to determine a length of the first sequence or a channel quantity of the first sequence, an index in the index set is used to determine a start position of the first sequence in the second sequence, and the first sequence can be obtained by truncating the second sequence based on the value in the value set and the index in the index set.

In other words, because a transceiving end truncates a long sequence or a multi-channel sequence based on a value in the value set and an index in the index set, the value in the value set and the index in the index set can be properly designed, so that the sequence obtained by truncating the long sequence or the multi-channel sequence based on the value and the index still has a good correlation characteristic, thereby improving sensing performance. In addition, when the value set and the index set include a plurality of elements, sequences of different lengths or different channel quantities can be obtained based on different values and indexes, to meet sensing devices/sensing services having different bandwidth, delay, and coverage requirements.

The technical solutions in embodiments of this application may be applied to various systems. The system may be a 3rd generation partnership project (3rd generation partnership project, 3GPP) system, for example, a 5th generation (5th generation, 5G) or 6th generation (6th generation, 6G) mobile communication system, a sidelink (sidelink, SL) system, an ultra-wideband (ultra-wideband, UWB) system, a vehicle-to-everything (vehicle-to-everything, V2X) system, a device-to-device (device-to-device, D2D) communication system, a machine-to-machine (machine-to-machine, M2M) communication system, an internet of things (internet of things, IoT), or another next generation communication system. The communication system may alternatively be a non-3GPP communication system, for example, a wireless local area network (wireless local area network, WLAN) system like a wireless fidelity (wireless fidelity, Wi-Fi) system. This is not limited.

The technical solutions in embodiments of this application may be applied to various scenarios, for example, a scenario in which a signal needs to be generated based on a sequence, for example, sensing, communication, integrated sensing and communication, and positioning.

The foregoing systems and scenarios to which this application is applicable are merely examples for description. Systems and scenarios to which this application is applicable are not limited thereto. This is uniformly described herein. Details are not described below again.

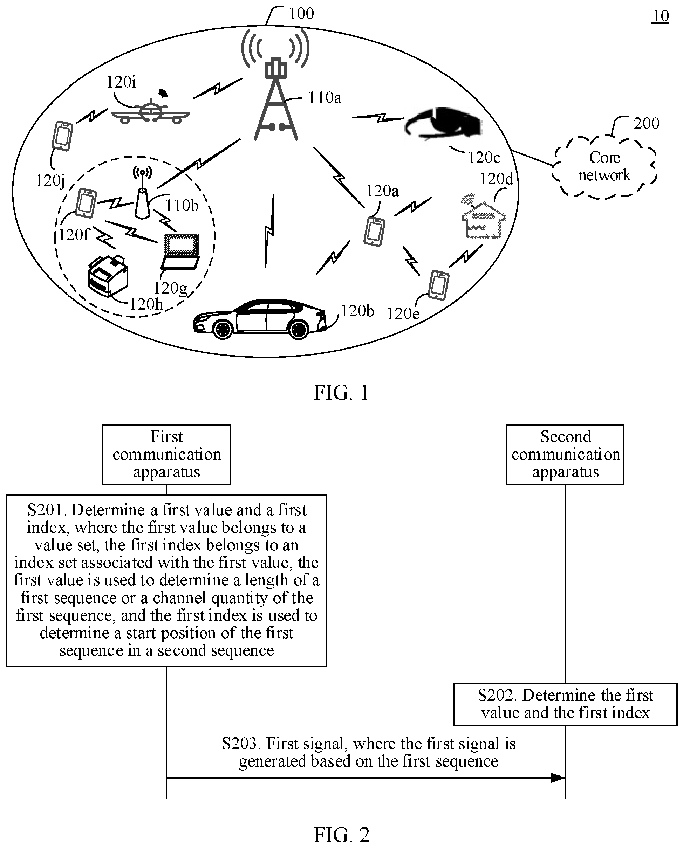

FIG. 1 is a diagram of a possible and non-limiting system. As shown in FIG. 1, the communication system 10 includes a radio access network (radio access network, RAN) 100. Further, a core network (core network, CN) 200 may be further included. The RAN 100 includes at least one RAN node (for example, 110a and 110b in FIG. 1, which are collectively referred to as 110) and at least one terminal (for example, 120a to 120j in FIG. 1, which are collectively referred to as 120).

Optionally, the RAN 100 may further include another RAN node, for example, a wireless relay device and/or a wireless backhaul device (not shown in FIG. 1). The terminal 120 is connected to the RAN node 110 in a wireless manner, or the terminal 120 may be located outside coverage of the RAN node. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, the access network device in a V2X technology may be a road side unit (road side unit, RSU). All or some functions of the RAN node in this application may alternatively be implemented by using a software function run on hardware, or may be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, a UE, a mobile station, a mobile terminal, or the like. The terminal may be widely used in various scenarios, for example, device-to-device (device-to-device, D2D) communication, V2X communication, machine-type communication (machine-type communication, MTC), internet of things (internet of things, IoT), virtual reality, augmented reality, industrial control, autonomous driving, remote medical, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an aircraft, a ship, a robot, a robotic arm, a smart home device, or the like. A device form of the terminal is not limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem with evolution of a network architecture and emergence of a new service scenario.

In a communication system to which this application is applicable, a transmit end of a reference signal may be a RAN node, and correspondingly, a receive end may be a terminal or a RAN node that is the same as or different from the transmit end; or a transmit end of a reference signal may be a terminal, and correspondingly, a receive end may be a RAN node or a terminal that is the same as or different from the transmit end. Terminals communicate with each other or perform sensing through a sidelink (sidelink, SL).

The following describes the communication method provided in embodiments of this application with reference to the communication system shown in FIG. 1. It should be noted that in the following embodiments of this application, a name of a message between execution entities, a name of each parameter, a name of each piece of information, or the like is merely an example, and may have another name in another embodiment. This is not specifically limited in the method provided in this application.

It may be understood that, in embodiments of this application, an execution entity may be a terminal or a RAN node. The terminal or the RAN node may perform some or all of steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

It may be understood that, in this application, an example in which the RAN node or the terminal is an execution entity of an interaction example is used for description. However, the execution entity of the interaction example is not limited in this application. For example, a method performed by the RAN node in this application may alternatively be performed by a module (for example, a chip, a chip system, or a processor) used in the RAN node, or may be implemented by a logical node, a logical module, or software that can implement all or some functions of the RAN node. A method performed by the terminal in this application may alternatively be performed by a module (for example, a chip, a chip system, or a processor) used in the terminal, or may be implemented by a logical node, a logical module, or software that can implement all or some functions of the terminal.

In addition, in this application, "sending information" may be understood as that a device sends information to another device, or may be understood as that a logical module in a device sends information to another logical module. For example, "the terminal sends information" may be understood as that the terminal sends information to another device (for example, a RAN node), or may be understood as that a logical module 1 (for example, a processing module) in the terminal sends information to a logical module 2 (for example, a transceiver module) in the terminal.

In this application, "receiving information" may be understood as that a device receives information from another device, or may be understood as that a logical module in a device receives information from another logical module. For example, "the terminal receives information" may be understood as that the terminal receives information from another device (for example, a RAN node), or may be understood as that a logical module 1 (for example, a processing module) in the terminal receives information from a logical module 2 (for example, a transceiver module) in the terminal.

In this application, "sending information to... (for example, a RAN node) "or a related example in the accompanying drawings may be understood as that a destination end of the information is the RAN node, and may include directly or indirectly sending information to the RAN node. "Receiving information from... (for example, a RAN node)" or "receiving information from... (for example, a RAN node)" or "receiving information sent by (for example, a RAN node)" or a related example in the accompanying drawings may be understood as that a source end of the information is the RAN node, and may include directly or indirectly receiving information from the RAN node. Information may undergo necessary processing, for example, a format change, between a source end for sending the information and a destination end. However, the destination end may understand valid information from the source end. Similar expressions in this application may be understood similarly, and details are not described herein.

FIG. 2 is a schematic flowchart of a communication method according to an embodiment of this application. The communication method may include the following steps.

S201. A first communication apparatus determines a first value and a first index.

The first communication apparatus is a signal sender. For example, the first communication apparatus may be a RAN node or a terminal. This is not specifically limited in this application.

The first value belongs to a value set, and the first value is used to determine a length of a first sequence or a channel quantity of the first sequence. The first index belongs to an index set associated with the first value, and the first index is used to determine a start position of the first sequence in a second sequence. The second sequence includes the first sequence.

In a possible implementation, the value set includes at least one or at least two values. Each value in the value set is associated with an index set, and the index set includes at least one index.

For example, when the value set does not include a length or a channel quantity of the second sequence, the value set includes at least one value. When the value set includes a length or a channel quantity of the second sequence, the value set includes at least two values, and the at least two values include the length or the channel quantity of the second sequence.

In a first possible implementation, a value in the value set is a sequence length, and an index set associated with the value in the value set is an element index set. That is, the index set includes at least one element index, and the element index is an index of an element of a sequence. In this case, the first value is the length of the first sequence, and the first value is less than or equal to the length of the second sequence. The first index is an index of an element of the second sequence, and a value of the first index is less than the length of the second sequence.

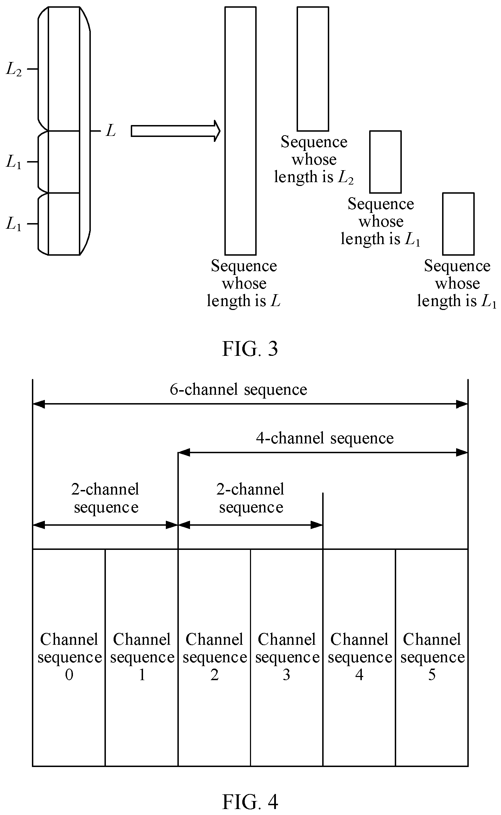

The sequence length in the value set represents a length of a sequence that can or is allowed to be truncated from the second sequence. For example, as shown in FIG. 3, an example in which the length of the second sequence is Lis used. If the value set is {*L*₁, *L*₂}*,* it indicates that a sequence whose length is *L*₁ or *L*₂ can be truncated from the second sequence.

An element index in an index set associated with a sequence length *Lᵢ* indicates a start position of a sequence whose length is *Lᵢ* in the second sequence, or indicates an element index of a 1^{st} element of the sequence whose length is *Lᵢ* in the second sequence.

For example, as shown in FIG. 3, an example in which the value set is {*L*₁, *L*₂} is used. If an index set associated with *L*₁ is {0, *L*₁}, it indicates that a sequence whose length is *L*₁ may be truncated starting from an element whose element index is 0 or *L*₁ of the second sequence; or if an index set associated with *L*₂ is {2*L*₁}, it indicates that a sequence whose length is *L*₂ may be truncated starting from an element whose element index is 2*L*₁ of the second sequence.

It may be understood that in the foregoing example related to FIG. 3, the value set does not include the length of the second sequence. Certainly, the value set may alternatively include the length of the second sequence. In this case, the value set may be {*L*₁, *L*₂, *L*}*,* and an index set associated with *L* is {0}. When the first value is *L,* the first sequence is the same as the second sequence.

In a possible implementation, in this implementation, the first sequence and the second sequence may be single-channel sequences, or may be multi-channel sequences. When the first sequence and the second sequence are multi-channel sequences, it is assumed that the second sequence is a K-channel sequence whose length is *L,* that is, the second sequence includes *K* channel sequences, a length of each channel sequence is L, the first value is *L*₁, and the first index is 0. In this case, the first sequence is a K-channel sequence whose length is *L*₁, that is, the first sequence includes *K* channel sequences, and a length of each channel sequence is *L*₁. A *k*^{th} channel sequence of the first sequence includes an element 0 to an element *L*₁ - 1 of a *k*^{th} channel sequence of the second sequence, and k = 1,2, *..., K.*

In a possible implementation, in this implementation, the value set may also be referred to as a length set, and the index set associated with the value in the value set may also be referred to as a start position set or an element index set. Certainly, the value set and the index set may also have other names. This is not specifically limited in this application.

In a second possible implementation, a value in the value set is a channel quantity of the multi-channel sequence, and an index set associated with the value in the value set is a channel index set of the multi-channel sequence. That is, the index set includes at least one channel index, and the channel index set is an index of a channel sequence of the multi-channel sequence. In this case, the first sequence and the second sequence are multi-channel sequences, the first value is a channel quantity of the first sequence, and the first value is less than or equal to a channel quantity of the second sequence. The first index is an index of a channel sequence of the second sequence, and a value of the first index is less than the channel quantity of the second sequence.

The channel quantity in the value set represents a channel quantity of a multi-channel sequence that can or is allowed to be truncated from the second sequence. If the value set is {*K*₁, *K*₂}, it indicates that a multi-channel sequence whose channel quantity is *K*₁ or *K*₂ can be truncated from the second sequence.

For example, as shown in FIG. 4, an example in which the second sequence is a 6-channel sequence is used. If the value set is {2,4}, it indicates that a 2-channel sequence or a 4-channel sequence can be truncated from the second sequence.

A channel index in an index set associated with a channel quantity *Kᵢ* indicates a start position of a sequence whose channel quantity is *Kᵢ* in the second sequence, or indicates a channel index of a 1^{st} channel sequence of the sequence whose channel quantity is *Kᵢ* in the second sequence.

For example, as shown in FIG. 4, an example in which the value set is {2,4} is used. If an index set associated with the channel quantity 2 is {0,2}, it indicates that a multi-channel sequence whose channel quantity is 2 may be truncated starting from a channel sequence whose channel index is 0 or 2 of the second sequence, that is, the multi-channel sequence includes a channel sequence 0 and a channel sequence 1 of the second sequence, or includes a channel sequence 2 and a channel sequence 3 of the second sequence. If an index set associated with the channel quantity 4 is 2, it indicates that a multi-channel sequence whose channel quantity is 4 may be truncated starting from a channel sequence whose channel index is 2 of the second sequence, that is, the multi-channel sequence includes the channel sequence 2, the channel sequence 3, a channel sequence 4, and a channel sequence 5 of the second sequence.

It may be understood that in the foregoing example related to FIG. 4, the value set does not include the channel quantity of the second sequence. Certainly, the value set may alternatively include the channel quantity of the second sequence. In this case, the value set may be {2,4,6}, and an index set associated with 6 is {0}. When the first value is 6, the first sequence is the same as the second sequence.

It may be understood that a channel quantity of a sequence may be used to determine a total length of the sequence, that is, the total length of the sequence is a product of the channel quantity and a length of each channel sequence.

In a possible implementation, in this implementation, the value set may also be referred to as a channel quantity set, and the index set associated with the value in the value set may also be referred to as a start position set or a channel index set. Certainly, the value set and the index set may also have other names. This is not specifically limited in this application.

In a third possible implementation, the value set includes a length set and a channel quantity set, and correspondingly, the index set includes an element index set and a channel index set. For example, an example in which the second sequence is a -channel whose length isK *L* is used. In this implementation, a *K*-channel sequence whose length is *L*₁ may be truncated based on the length set and the element index set, and then a *K*₁-channel sequence whose length is *L*₁ may be truncated based on the channel quantity set and the channel index set.

After step S201, the first communication apparatus may determine the first sequence based on the first value and the first index.

In a possible implementation, the length of the first sequence is the first value, and an index of a 1^{st} element of the first sequence in the second sequence is the first index. For example, based on the example shown in FIG. 3, if the first value is *L*₁, and the first index is 0, the first sequence includes the element 0 to the element *L*₁ - 1 in the second sequence, or the first sequence includes the element 0 to the element in the second sequence.*L*₁ - 1

In another possible implementation, when the second sequence is a multi-channel sequence, the channel quantity of the first sequence is the first value; and a channel index of a 1^{st} channel sequence of the first sequence in the second sequence is the first index. For example, based on the example shown in FIG. 4, if the first value is 2, and the first index is 2, the first sequence includes the channel sequence 2 and the channel sequence 3 of the second sequence, or the first sequence includes the channel sequence 2 and the channel sequence 3 of the second sequence.

S202. A second communication apparatus determines the first value and the first index.

The second communication apparatus is a signal receiver. For example, the second communication apparatus may be a RAN node or a terminal, and the second communication apparatus and the first communication apparatus may be the same or may be different. When the second communication apparatus is the same as the first communication apparatus, step S202 may not be performed. In addition, for related implementations of the first value and the first index, refer to the related descriptions in step S201. Details are not described herein again.

S203. The first communication apparatus sends a first signal. The second communication apparatus receives the first signal.

The first signal is generated based on the first sequence. For example, after step S201, the first communication apparatus may determine the first sequence based on the first value and the first index, and generate the first signal based on the first sequence.

In a possible implementation, the first signal may be used for sensing, communication, positioning, channel estimation, or the like. For example, the first signal may be a sensing signal, a positioning signal, a reference signal, or the like. A function and a name of the first signal are not specifically limited in this application.

In a possible implementation, when the first signal is used for sensing, the first signal received by the second communication apparatus may be a signal obtained after the first signal sent by the first communication apparatus is reflected or refracted by the surrounding environment. The first signal received by the second communication apparatus may also be understood as an echo signal of the first signal sent by the first communication apparatus.

In a possible implementation, the first communication apparatus sends the first signal on a first resource, and the second communication apparatus receives the first signal on the first resource. A length of the first resource is determined based on the first value, and a start position of the first resource is determined based on the first index. That is, the first value is further used to determine the length of the first resource, and the first index is further used to determine the start position of the first resource. The length of the first resource may be a quantity of frequency domain resource units and/or time units included in the first resource.

Based on the foregoing solution, because a transceiving end truncates a long sequence or a multi-channel sequence based on a value in the value set and an index in the index set, the value in the value set and the index in the index set can be properly designed, so that the sequence obtained by truncating the long sequence or the multi-channel sequence based on the value and the index still has a good correlation characteristic, thereby improving sensing performance. In addition, when the value set and the index set include a plurality of elements, sequences of different lengths or different channel quantities can be obtained based on different values and indexes, to meet sensing devices/sensing services having different bandwidth, delay, and coverage requirements.

In a possible implementation, the value in the value set and the index in the index set are related to a correlation characteristic of the second sequence. For example, when the second sequence is designed, while the correlation characteristic of the entire second sequence is ensured, a correlation characteristic of a short sequence or a multi-channel sequence that is truncated when the short sequence or the multi-channel sequence with a smaller channel quantity is truncated from the second sequence also needs to be considered.

In a first possible implementation, if the length of the second sequence is *L*, the second sequence has a good autocorrelation characteristic, and a short sequence whose length is *L*₁ and that is truncated starting from the element 0 or an element *L*₁, or a short sequence whose length is *L*₂ and that is truncated starting from an element 2*L*₁ , also has a good autocorrelation characteristic, the value set may be {*L*₁, *L*₂, *L*}, and index sets associated with values in the value set may be {0, *L*₁}, {2*L*₁ }, and {0} respectively. Therefore, the designed second sequence is equivalently implemented as a sequence whose length is *L*, two sequences whose length is *L*₁, and a sequence whose length is *L*₂.

For example, the second sequence may be designed in an AI manner, or may be designed in another manner. This is not limited. In addition, a sequence set including *M* sequences may be designed, and *M* may be understood as a sequence capacity. The sequence set may include the second sequence. The M sequences have a same length, and the sequences meet a same truncation characteristic. That is, the sequences correspond to a same value set and a same value-associated index set. For example, for each sequence, a short sequence whose length is *L*₁ and that is truncated starting from an element 0 or an element *L*₁, or a short sequence whose length is *L*₂ and that is truncated starting from an element 2*L*₁, has a good autocorrelation characteristic.

Further, short sequences at a same truncation position corresponding to different sequences in the sequence set have a good cross-correlation characteristic. For example, if the sequence set includes a sequence A and a sequence B, a sequence a whose length is *L*₁ and that is truncated starting from the element *L*₁ of the sequence A and a sequence b whose length is *L*₁ and that is truncated starting from the element *L*₁ of the sequence B have a good cross-correlation characteristic.

It may be understood that the second sequence or the sequence in the sequence set may be a single-channel sequence, or may be a multi-channel sequence. This is not specifically limited in this application.

Table 1 shows phases of elements of each channel sequence in a four-channel sequence in a first sequence set, and Table 2 shows phases of elements of each channel sequence in a four-channel sequence in a second sequence set. In the first sequence set and the second sequence set, sequence lengths are all 280, and amplitudes of sequence elements are all 1.

**Table 1**

| Channel index | Phases of sequence elements |
|---|---|
| 0 | 5.01, 0.5, 1.97, 1.68, 1.97, 1.49, 0.46, 4.77, 0.36, 2.0, 5.76, 6.17, 1.66, 0.04, 1.97, 1.13, 1.81, 1.31, 5.28, 1.9, 0.75, 4.46, 4.91, 4.92, 3.94, 5.07, 4.91, 1.18, 0.13, 2.13, 3.64, 5.3, 5.57, 6.12, 5.46, 4.81, 5.34, 1.83, 4.72, 5.57, 0.22, 1.99, 1.81, 1.64, 1.41, 4.09, 4.96, 5.13, 5.24, 4.66, 4.05, 0.04, 0.48, 1.37, 1.71, 4.36, 5.05, 1.72, 4.55, 1.71, 6.25, 4.57, 5.27, 1.24, 0.39, 1.73, 1.05, 2.21, 2.24, 4.62, 5.1, 5.81, 0.49, 5.83, 1.97, 4.04, 4.18, 3.8, 4.53, 1.21, 4.77, 0.95, 5.63, 1.02, 6.0, 1.84, 1.6, 1.3, 5.89, 2.11, 0.93, 2.04, 1.41, 0.49, 0.29, 4.05, 5.45, 4.83, 0.61, 2.3, 5.35, 1.53, 4.94, 4.12, 1.11, 5.25, 0.51, 1.99, 4.41, 0.6, 1.34, 0.44, 5.56, 5.27, 1.66, 1.7, 6.17, 5.25, 0.35, 6.01, 1.27, 4.22, 1.6, 5.16, 6.14, 4.37, 4.6, 1.0, 5.11, 1.18, 1.37, 6.14, 0.73, 6.06, 0.91, 0.69, 5.47, 6.0, 4.75, 5.34, 1.41, 5.3, 1.03, 1.06, 4.66, 6.21, 0.17, 1.06, 0.6, 1.53, 4.56, 5.19, 5.0, 4.64, 5.29, 4.52, 0.9, 5.29, 5.75, 5.03, 6.22, 5.08, 5.3, 4.64, 0.5, 5.02, 0.73, 5.54, 4.76, 4.54, 1.09, 1.03, 2.1, 4.88, 0.55, 1.76, 2.28, 5.76, 5.34, 2.04, 1.08, 4.96, 1.51, 5.73, 1.51, 4.54, 1.29, 6.28, 0.98, 5.81, 0.47, 1.3, 0.65, 4.51, 3.87, 1.68, 0.26, 4.83, 1.51, 5.3, 0.92, 4.38, 1.08, 2.17, 4.99, 4.77, 4.65, 5.15, 5.91, 1.04, 0.4, 4.44, 5.49, 4.72, 4.5, 5.3, 4.93, 6.21, 0.97, 4.78, 0.05, 4.42, 4.72, 1.36, 6.24, 5.2, 1.22, 2.11, 5.89, 6.01, 5.44, 6.05, 6.03, 1.34, 4.26, 1.94, 2.01, 1.84, 1.05, 6.0, 5.06, 5.39, 1.46, 1.09, 6.05, 0.36, 5.78, 1.66, 5.62, 1.52, 1.28, 5.46, 2.29, 0.62, 5.09, 1.01, 0.46, 1.55, 0.99, 4.36, 4.41, 0.68, 0.8, 1.05, 4.7, 1.13, 1.04, 2.25, 4.69, 5.06, 4.55, 1.53, 1.41, 2.56, 5.13, 1.98, 5.77, 0.97, 5.24, 0.43 |
| 1 | 0.92, 1.12, 2.32, 4.78, 5.35, 4.81, 1.31, 0.55, 5.58, 0.99, 4.74, 1.2, 1.49, 1.85, 4.65, 0.99, 4.77, 4.94, 0.28, 1.24, 1.6, 2.03, 1.1, 1.88, 1.48, 2.27, 0.93, 4.23, 5.92, 1.17, 5.43, 0.88, 4.3, 1.3, 3.8, 0.42, 6.08, 0.9, 0.52, 6.1, 4.58, 5.07, 0.47, 4.72, 1.74, 1.18, 0.92, 4.04, 1.34, 0.31, 6.14, 1.92, 4.69, 1.21, 5.16, 0.09, 4.43, 4.89, 5.43, 5.72, 0.86, 0.7, 1.4, 2.14, 3.89, 5.54, 4.09, 1.45, 1.78, 1.34, 6.13, 5.4, 5.04, 5.14, 0.92, 1.53, 5.44, 5.48, 0.93, 4.85, 4.79, 2.65, 4.55, 4.99, 1.18, 5.01, 5.71, 1.3, 1.54, 5.34, 1.51, 2.0, 5.09, 5.6, 1.2, 4.37, 3.41, 1.76, 5.19, 1.58, 4.52, 4.71, 0.53, 5.95, 1.56, 4.37, 4.43, 0.4, 4.98, 0.66, 5.2, 1.92, 4.54, 0.75, 6.04, 0.97, 5.21, 4.48, 1.03, 1.13, 4.02, 1.25, 3.67, 5.02, 1.29, 5.25, 5.56, 5.73, 4.63, 1.13, 5.37, 5.64, 1.38, 5.6, 4.48, 0.84, 1.53, 3.95, 3.63, 1.36, 4.57, 4.57, 5.41, 0.12, 0.47, 1.56, 5.6, 4.84, 1.07, 3.58, 5.45, 1.35, 0.77, 1.02, 5.65, 4.52, 5.87, 0.69, 4.04, 6.14, 1.26, 1.27, 4.34, 5.63, 3.62, 5.72, 5.07, 5.49, 1.85, 4.97, 1.45, 5.23, 0.63, 4.97, 1.71, 1.34, 1.62, 2.27, 1.11, 0.15, 5.35, 2.38, 4.68, 1.7, 4.75, 1.27, 1.03, 1.85, 4.54, 1.16, 5.08, 4.65, 4.58, 2.03, 4.96, 4.48, 0.87, 0.4, 4.66, 5.29, 5.12, 0.8, 5.46, 1.25, 5.24, 2.01, 5.63, 5.41, 0.92, 4.6, 1.31, 5.04, 0.62, 0.81, 4.36, 5.04, 0.85, 6.19, 5.11, 0.61, 4.97, 0.05, 6.2, 0.9, 4.84, 1.42, 5.32, 1.98, 1.53, 0.97, 4.96, 1.37, 4.73, 5.46, 5.72, 0.82, 5.45, 1.13, 5.4, 5.2, 2.14, 4.69, 4.68, 4.91, 1.4, 3.48, 0.93, 5.66, 5.04, 2.16, 1.65, 1.95, 5.11, 5.24, 4.12, 5.35, 5.5, 5.03, 2.07, 2.05, 5.89, 0.97, 4.77, 4.69, 0.63, 5.58, 0.16, 5.68, 2.01, 5.8, 4.88, 1.43, 0.99, 4.56, 1.28, 1.44, 1.43, 4.85, 1.19, 5.46 |
| 2 | 0.59, 0.05, 5.55, 6.23, 1.83, 0.79, 5.19, 5.65, 2.01, 0.95, 1.02, 1.28, 6.07, 5.39, 0.51, 5.83, 4.28, 0.61, 4.15, 1.65, 4.64, 3.97, 4.5, 1.26, 4.91, 4.82, 4.45, 0.34, 4.98, 0.67, 0.83, 0.75, 0.9, 0.77, 1.61, 1.62, 4.95, 5.24, 0.9, 1.26, 2.34, 5.35, 1.04, 4.37, 5.01, 6.18, 3.83, 0.25, 1.26, 1.22, 1.6, 0.49, 0.97, 1.75, 5.65, 5.3, 0.14, 0.48, 6.0, 5.14, 5.53, 5.22, 3.91, 4.05, 1.55, 0.71, 4.8, 4.15, 0.91, 0.09, 1.9, 2.06, 1.38, 5.05, 4.73, 5.77, 5.9, 1.75, 5.45, 5.51, 1.01, 5.74, 1.16, 1.78, 5.07, 4.98, 0.63, 4.38, 4.14, 5.45, 2.22, 0.74, 1.49, 4.05, 0.99, 0.97, 1.66, 4.94, 2.13, 5.68, 6.05, 1.23, 6.1, 5.42, 5.33, 6.25, 0.02, 4.41, 1.44, 4.83, 5.15, 1.34, 4.62, 4.48, 5.28, 1.85, 1.7, 5.79, 2.36, 1.74, 4.72, 1.75, 0.4, 4.92, 1.0, 5.88, 6.2, 3.52, 5.74, 6.05, 4.83, 1.53, 5.1, 5.34, 1.54, 5.25, 5.81, 5.06, 5.0, 2.53, 1.02, 0.97, 5.33, 5.38, 5.22, 5.76, 1.77, 4.82, 6.04, 5.25, 0.88, 3.63, 0.73, 5.5, 1.43, 1.61, 1.18, 1.79, 5.03, 1.33, 4.74, 0.78, 6.07, 1.41, 5.3, 4.7, 5.21, 0.46, 1.03, 1.43, 4.03, 1.73, 0.18, 1.55, 0.66, 4.83, 5.55, 2.26, 1.62, 1.36, 2.44, 0.43, 1.02, 2.15, 1.37, 3.59, 1.77, 0.42, 1.89, 5.07, 5.01, 2.42, 0.55, 5.81, 5.03, 5.95, 1.71, 1.86, 0.96, 1.6, 3.98, 1.24, 0.54, 5.14, 0.97, 4.27, 5.53, 5.5, 2.8, 0.82, 4.26, 4.9, 1.44, 0.09, 0.77, 5.46, 5.27, 1.77, 5.59, 1.49, 4.53, 5.02, 5.18, 1.65, 1.21, 5.38, 1.47, 5.64, 0.8, 1.46, 4.72, 2.06, 5.1, 0.77, 5.46, 4.43, 0.51, 0.25, 4.56, 4.85, 4.57, 5.01, 4.86, 4.59, 1.9, 0.81, 4.5, 0.76, 0.72, 0.58, 3.85, 5.41, 5.67, 5.41, 5.46, 1.48, 4.6, 1.43, 1.25, 4.23, 0.13, 3.56, 1.0, 1.37, 1.57, 1.6, 6.24, 5.89, 1.03, 4.65, 2.45, 5.31, 0.08, 1.91, 0.91, 6.19, 5.51, 1.15, 0.91, 1.59 |
| 3 | 4.64, 5.1, 0.88, 0.23, 1.09, 5.38, 1.3, 4.08, 5.09, 0.42, 1.87, 5.6, 1.56, 5.07, 1.98, 1.37, 1.01, 5.93, 0.93, 6.21, 5.45, 5.89, 0.9, 0.32, 0.14, 0.44, 2.16, 1.79, 1.29, 5.3, 1.71, 4.98, 0.86, 4.66, 5.34, 5.16, 5.48, 4.43, 0.45, 5.32, 1.13, 1.44, 4.68, 1.83, 5.16, 6.14, 5.06, 5.03, 4.23, 0.98, 4.87, 5.57, 4.88, 0.7, 6.05, 4.55, 5.01, 5.3, 5.3, 5.41, 1.77, 0.88, 5.22, 1.58, 5.75, 4.41, 4.52, 5.4, 4.78, 4.42, 1.85, 6.06, 2.24, 1.01, 1.02, 0.67, 0.65, 5.49, 5.3, 5.05, 1.33, 4.86, 0.92, 4.97, 4.42, 5.43, 3.76, 4.82, 2.03, 0.39, 0.2, 5.22, 0.8, 5.14, 4.23, 5.87, 0.69, 2.97, 5.32, 1.73, 4.77, 4.86, 5.4, 1.29, 0.37, 0.88, 4.92, 1.56, 6.05, 4.35, 4.77, 1.44, 6.09, 6.13, 1.35, 5.52, 0.75, 0.47, 1.19, 5.8, 6.01, 5.49, 5.24, 5.04, 5.66, 1.96, 5.39, 4.31, 5.39, 4.17, 2.13, 5.56, 1.66, 0.29, 4.94, 5.27, 5.26, 0.76, 5.28, 0.57, 2.12, 5.01, 5.04, 5.0, 1.62, 0.49, 5.88, 1.43, 1.12, 5.3, 2.14, 1.9, 1.59, 4.34, 5.26, 4.98, 1.36, 1.41, 0.44, 4.52, 1.44, 1.14, 5.48, 4.9, 4.32, 0.53, 1.38, 4.8, 5.1, 3.98, 5.08, 0.85, 5.53, 1.09, 0.93, 1.12, 5.74, 5.6, 5.32, 2.98, 5.1, 0.09, 1.66, 2.27, 0.38, 0.46, 5.06, 4.65, 1.5, 1.3, 2.43, 1.04, 5.4, 1.34, 1.75, 0.64, 0.35, 1.08, 5.07, 1.19, 5.51, 5.11, 3.97, 4.08, 1.64, 1.14, 0.8, 2.01, 0.63, 4.94, 0.88, 1.16, 5.2, 1.71, 1.43, 1.58, 4.86, 4.51, 4.62, 5.11, 6.15, 5.25, 4.82, 1.19, 1.22, 4.49, 5.88, 5.2, 1.41, 2.29, 0.51, 4.56, 1.34, 0.56, 0.7, 1.77, 5.11, 4.18, 1.01, 5.12, 6.09, 0.92, 1.04, 0.52, 1.03, 0.68, 4.91, 4.67, 4.95, 0.66, 5.99, 5.21, 0.52, 5.43, 4.95, 0.98, 0.63, 5.34, 4.66, 6.15, 2.05, 4.48, 1.98, 1.69, 4.62, 0.74, 1.19, 1.1, 0.8, 1.57, 0.08, 6.28, 4.18, 5.72, 5.19, 1.18, 0.53, 2.11, 4.87, 4.83 |

**Table 2**

| Channel index | Phases of sequence elements |
|---|---|
| 0 | 1.64, 4.53, 6.05, 2.07, 4.33, 0.94, 1.33, 4.36, 0.53, 1.66, 1.5, 4.02, 5.12, 0.44, 5.46, 1.52, 4.75, 5.92, 5.01, 4.42, 5.53, 4.85, 1.58, 6.07, 1.46, 1.6, 4.96, 5.55, 1.55, 4.71, 0.59, 1.72, 1.64, 1.66, 1.58, 1.59, 4.77, 1.58, 0.37, 0.59, 5.42, 5.36, 0.71, 2.14, 4.36, 6.17, 2.56, 0.25, 4.58, 4.43, 0.24, 5.15, 1.89, 4.53, 0.58, 1.15, 5.25, 0.99, 0.41, 0.65, 1.54, 5.34, 5.3, 1.61, 4.04, 1.03, 0.68, 1.62, 1.79, 5.28, 1.49, 5.88, 4.42, 5.65, 4.24, 4.11, 5.98, 5.94, 4.63, 1.84, 5.34, 4.74, 4.24, 5.51, 0.96, 0.24, 6.11, 1.51, 0.88, 1.82, 6.1, 1.47, 0.36, 1.77, 1.24, 5.01, 4.98, 0.75, 4.97, 5.35, 1.23, 1.27, 6.03, 2.11, 4.55, 1.15, 5.17, 5.15, 1.29, 0.1, 4.23, 0.67, 6.1, 1.31, 5.06, 3.56, 0.1, 5.23, 0.72, 6.21, 0.65, 1.95, 3.94, 4.46, 1.35, 1.94, 4.69, 5.4, 0.86, 5.22, 4.44, 5.34, 0.76, 1.01, 0.21, 5.42, 1.31, 0.87, 1.43, 2.43, 6.23, 0.94, 5.74, 4.37, 0.63, 0.72, 6.16, 4.33, 0.9, 1.02, 1.13, 3.75, 2.04, 1.09, 5.61, 5.14, 1.11, 1.61, 1.66, 4.18, 5.76, 0.89, 1.71, 4.11, 1.06, 4.55, 4.98, 5.19, 6.09, 4.41, 1.24, 0.41, 0.13, 1.74, 0.01, 0.45, 5.17, 0.43, 1.87, 4.64, 0.15, 0.95, 1.1, 0.95, 5.66, 4.44, 0.63, 1.28, 4.93, 0.03, 4.59, 4.76, 4.92, 0.02, 5.37, 0.57, 5.93, 4.09, 0.43, 1.25, 0.8, 5.56, 1.19, 0.71, 1.33, 5.57, 4.09, 5.04, 4.31, 1.38, 5.41, 0.78, 5.83, 4.84, 5.95, 0.78, 5.59, 3.87, 1.24, 4.98, 0.52, 1.92, 5.21, 1.99, 5.28, 5.75, 1.12, 6.07, 4.5, 0.75, 0.43, 0.84, 1.41, 4.79, 4.9, 5.34, 4.02, 0.28, 3.89, 5.42, 5.45, 1.68, 0.63, 1.78, 1.64, 0.58, 4.38, 5.39, 4.85, 1.01, 0.98, 1.55, 5.37, 5.65, 0.18, 5.31, 1.9, 5.34, 0.86, 5.96, 4.92, 5.4, 6.22, 1.15, 0.56, 4.64, 0.19, 0.13, 4.99, 5.87, 1.38, 4.57, 0.99, 1.01, 1.19, 1.02, 6.07, 6.21, 4.89, 5.47 |
| 1 | 2.21, 4.19, 0.66, 1.23, 4.63, 5.43, 1.35, 4.48, 1.64, 6.12, 5.26, 0.66, 4.7, 1.98, 4.63, 0.93, 0.97, 4.62, 6.21, 2.54, 5.76, 4.81, 5.52, 5.04, 1.41, 1.05, 2.02, 0.89, 4.36, 0.68, 4.84, 5.27, 5.35, 3.86, 0.76, 4.45, 1.67, 5.42, 0.42, 2.11, 1.34, 2.51, 1.19, 0.42, 1.88, 4.48, 4.75, 6.2, 1.68, 3.89, 5.62, 5.41, 0.76, 2.0, 5.23, 1.56, 0.92, 0.49, 4.91, 4.28, 4.43, 4.39, 0.72, 1.24, 0.61, 4.88, 1.32, 4.59, 4.88, 5.32, 0.51, 6.26, 1.77, 4.85, 1.82, 0.1, 1.06, 5.49, 0.57, 0.67, 4.2, 6.08, 6.25, 0.49, 5.51, 6.07, 2.58, 2.04, 0.75, 1.25, 3.88, 0.19, 0.93, 5.98, 2.35, 1.47, 4.77, 4.75, 5.9, 4.78, 4.7, 1.07, 4.73, 5.26, 4.65, 4.44, 6.22, 1.27, 6.16, 5.57, 0.22, 5.46, 1.04, 0.59, 1.35, 4.39, 5.4, 0.94, 4.86, 0.51, 4.59, 1.41, 4.85, 1.79, 4.47, 1.7, 1.17, 4.02, 5.61, 0.91, 5.01, 3.26, 0.73, 0.89, 2.03, 4.1, 5.23, 1.12, 1.79, 5.27, 4.33, 5.48, 5.78, 4.87, 5.23, 1.73, 1.22, 0.03, 2.03, 2.28, 0.86, 1.04, 5.36, 5.33, 4.58, 4.71, 4.24, 1.4, 4.99, 0.48, 5.78, 5.21, 1.0, 5.96, 2.12, 0.98, 0.53, 5.06, 0.39, 1.93, 0.41, 6.13, 0.11, 4.95, 1.61, 5.76, 4.61, 1.67, 4.96, 4.79, 4.32, 1.77, 5.38, 0.35, 0.11, 5.28, 1.31, 1.53, 6.02, 4.53, 3.99, 1.97, 6.21, 0.5, 4.49, 4.52, 0.88, 0.88, 5.37, 5.08, 1.98, 1.63, 0.22, 4.6, 5.23, 4.48, 5.31, 1.3, 0.5, 1.51, 5.21, 2.27, 0.2, 1.63, 1.25, 2.37, 1.54, 1.03, 0.83, 1.27, 4.88, 4.83, 5.15, 1.66, 1.65, 5.23, 0.9, 4.99, 4.7, 0.1, 0.77, 1.46, 6.03, 4.72, 4.95, 5.4, 4.65, 5.38, 6.21, 1.62, 1.32, 0.93, 5.85, 5.88, 4.23, 4.4, 4.91, 0.41, 1.58, 4.27, 4.67, 0.11, 0.82, 0.24, 1.94, 1.43, 5.05, 4.93, 4.18, 1.07, 0.02, 5.41, 1.22, 0.42, 2.35, 0.92, 1.91, 4.21, 5.8, 5.03, 0.29, 1.74, 1.46, 5.16, 0.13, 3.57, 0.83, 1.35, 1.2, 4.18 |
| 2 | 4.88, 1.09, 5.22, 4.3, 4.41, 2.29, 0.45, 4.43, 1.43, 5.15, 4.35, 1.57, 3.8, 4.92, 5.89, 4.76, 0.85, 2.5, 5.11, 0.96, 4.64, 0.84, 4.61, 1.19, 1.75, 0.38, 0.3, 6.18, 0.4, 0.72, 4.85, 5.17, 5.65, 0.19, 4.63, 0.17, 0.83, 5.32, 2.78, 1.0, 0.95, 0.64, 5.44, 4.95, 4.42, 0.77, 1.53, 1.25, 5.7, 5.08, 5.19, 5.24, 0.04, 0.11, 5.36, 1.36, 5.96, 4.93, 2.04, 4.1, 0.89, 0.5, 5.18, 4.78, 5.37, 3.91, 5.41, 6.17, 4.1, 5.95, 6.27, 4.14, 5.54, 1.41, 0.61, 1.05, 4.12, 4.63, 2.07, 0.88, 1.62, 4.32, 1.22, 5.33, 0.2, 1.96, 5.52, 1.13, 5.95, 4.51, 4.23, 5.98, 0.26, 4.12, 5.09, 4.31, 1.72, 0.95, 5.66, 1.39, 0.2, 5.15, 5.18, 4.03, 5.35, 0.71, 1.72, 4.3, 1.13, 4.46, 6.11, 0.98, 4.84, 5.19, 4.59, 5.46, 0.6, 4.34, 0.16, 4.96, 0.35, 0.81, 1.75, 4.22, 2.22, 0.76, 0.76, 1.51, 1.76, 0.79, 0.12, 0.93, 1.7, 0.82, 4.95, 0.72, 4.78, 5.44, 1.78, 1.78, 0.31, 1.96, 0.97, 5.95, 4.21, 2.53, 1.64, 4.68, 0.05, 1.52, 4.8, 5.06, 0.94, 5.91, 5.62, 1.27, 5.0, 0.9, 5.04, 1.28, 6.06, 4.13, 1.18, 4.21, 4.98, 5.39, 1.87, 6.05, 4.56, 1.47, 5.63, 1.18, 1.86, 1.71, 4.22, 1.85, 5.44, 1.39, 1.66, 5.38, 4.75, 1.89, 0.84, 6.05, 2.27, 1.0, 1.82, 4.98, 0.97, 1.5, 0.98, 4.69, 5.79, 5.99, 1.75, 5.48, 4.54, 1.53, 2.12, 0.39, 1.34, 4.91, 1.24, 5.26, 1.67, 5.85, 1.18, 0.14, 0.57, 5.34, 1.66, 4.91, 1.36, 5.72, 5.39, 5.32, 4.25, 0.67, 1.87, 1.71, 4.72, 1.2, 1.69, 1.39, 0.77, 6.27, 2.03, 4.69, 5.32, 4.09, 1.53, 5.32, 0.86, 4.78, 1.82, 5.18, 0.95, 1.49, 5.56, 0.72, 6.02, 0.17, 1.37, 0.57, 0.67, 5.81, 1.01, 1.34, 6.26, 1.2, 1.07, 0.32, 0.78, 5.13, 4.81, 1.22, 0.9, 2.07, 5.53, 3.57, 4.63, 1.58, 1.28, 5.2, 4.77, 5.11, 4.09, 1.19, 1.45, 2.03, 1.86, 5.93, 4.87, 5.62, 3.83, 0.96, 0.91, 4.78, 1.75, 5.0 |
| 3 | 0.64, 1.03, 1.3, 1.03, 5.93, 4.77, 1.51, 1.34, 5.17, 1.84, 5.16, 1.23, 0.62, 1.93, 5.17, 1.21, 5.88, 5.03, 2.04, 5.76, 1.71, 0.19, 1.08, 4.14, 4.35, 5.13, 0.69, 1.79, 3.98, 5.83, 4.97, 0.16, 1.78, 1.94, 5.96, 1.41, 4.45, 1.62, 5.68, 4.62, 4.77, 1.48, 2.07, 1.57, 3.62, 3.82, 1.7, 1.6, 0.89, 5.12, 3.33, 1.24, 5.02, 2.29, 4.79, 5.5, 2.21, 1.16, 2.16, 1.26, 4.48, 1.2, 1.68, 4.84, 4.4, 1.05, 5.1, 1.23, 5.55, 4.54, 1.29, 1.7, 1.67, 6.08, 4.66, 4.73, 4.47, 1.77, 4.95, 0.26, 0.58, 1.41, 1.64, 1.61, 5.57, 1.29, 1.14, 0.97, 0.83, 5.03, 0.38, 1.66, 5.3, 5.9, 0.02, 5.5, 5.13, 1.28, 5.11, 1.53, 1.63, 5.8, 0.91, 0.06, 0.81, 5.8, 5.03, 0.9, 4.66, 1.6, 5.46, 0.88, 4.76, 0.44, 0.66, 6.12, 1.13, 5.09, 4.9, 4.17, 1.04, 5.65, 0.52, 5.8, 5.62, 5.72, 2.26, 2.4, 5.07, 2.19, 1.1, 5.51, 5.82, 4.85, 5.86, 5.32, 1.38, 4.36, 1.66, 0.67, 5.11, 4.43, 0.83, 1.63, 1.37, 5.41, 5.27, 4.86, 1.89, 5.41, 4.88, 1.45, 5.9, 5.45, 1.11, 1.01, 5.72, 5.57, 4.83, 1.95, 1.78, 6.15, 1.35, 5.14, 1.39, 4.7, 2.66, 1.47, 5.17, 0.41, 5.83, 6.13, 5.1, 4.89, 4.2, 4.79, 4.58, 0.51, 5.22, 0.35, 1.37, 5.32, 5.4, 1.92, 5.49, 1.84, 2.03, 5.12, 1.36, 5.19, 5.87, 1.23, 1.24, 1.85, 0.02, 4.77, 4.93, 4.11, 2.34, 4.3, 1.26, 5.81, 5.81, 5.79, 1.62, 0.16, 5.87, 4.81, 5.79, 5.73, 5.5, 5.48, 1.02, 4.68, 5.44, 1.19, 5.28, 5.75, 0.42, 0.19, 0.2, 1.26, 5.18, 5.05, 1.04, 4.81, 1.69, 1.3, 1.17, 1.2, 5.01, 5.45, 4.76, 0.33, 5.42, 4.12, 1.14, 1.03, 1.06, 0.13, 5.44, 0.85, 5.86, 5.65, 5.73, 4.78, 1.1, 0.69, 0.5, 5.3, 4.6, 5.25, 1.51, 0.89, 5.65, 4.23, 0.42, 1.05, 5.55, 1.25, 4.94, 4.91, 1.83, 0.71, 1.88, 5.91, 1.17, 5.33, 1.82, 4.75, 4.93, 0.77, 5.18, 0.47, 5.11, 5.88, 1.76, 5.56, 6.21, 5.3 |

During design of a sequence corresponding to Table 1, the correlation performance of a truncated short sequence is not considered. During design of a sequence corresponding to Table 2, the correlation performance of an entire sequence whose length is 280 is considered, the correlation performance of two multi-channel sequences whose length is 70 and including elements 0 to 70 and elements 70 to 139 is considered, and the correlation performance of a four-channel sequence whose length is 140 and including elements 140 to 279 is further considered.

Each sequence in the first sequence set corresponding to Table 1 is truncated by a length of 70 starting from the element 0. For an obtained short sequence set whose length is 70, an auto-ambiguity peak sidelobe is -36.5 dB, and a cross-ambiguity peak sidelobe is -16.7 dB. Each sequence in the second sequence set corresponding to Table 2 is truncated by a length of 70 starting from the element 0. For an obtained short sequence set whose length is 70, an auto-ambiguity peak sidelobe is -40 dB, and a cross-ambiguity peak sidelobe is -23.5 dB. Therefore, it can be learned that a correlation characteristic of a short sequence set corresponding to the second sequence set is better than a correlation characteristic of a short sequence set corresponding to the first sequence set.

In addition, when the correlation characteristics of the short sequence sets corresponding to the first sequence set and the second sequence set are analyzed, a carrier frequency is 26 GHz, a subcarrier spacing is 120 kHz, a Doppler shift is 7222 Hz, and adjacent channel sequences are sent on adjacent time domain symbols.

It should be noted that a constant modulus sequence obtained based on the phases shown in Table 1 and Table 2 is a frequency domain sequence. In this embodiment of this application, when a signal generated based on a frequency domain sequence is sent in an orthogonal frequency division multiplexing (orthogonal frequency division multiplexing, OFDM) system, each element of the frequency domain sequence may be mapped to a subcarrier in frequency domain, and then inverse fast Fourier transform (inverse fast Fourier transform, IFFT) is performed to convert the signal into a time domain signal for sending.

In addition, IFFT may be performed on the frequency domain sequence to obtain a time domain sequence corresponding to the frequency domain sequence. Similarly, fast Fourier transform (fast Fourier transform, FFT) may be performed on a time domain sequence to obtain a frequency domain sequence corresponding to the time domain sequence. A correlation of the frequency domain sequence is a correlation of the time domain sequence obtained by performing IFFT on the frequency domain sequence. According to properties of Fourier transform, a correlation operation in time domain is equivalent to conjugate point multiplication in frequency domain. Therefore, when IFFT is performed on a conjugate point multiplication result of two frequency domain sequences, a correlation result of time domain sequences corresponding to the two frequency domain sequences may be obtained.

In a second possible implementation, if the channel quantity of the second sequence is *K*, the second sequence has a good autocorrelation characteristic, and a multi-channel sequence whose channel quantity is *K*₁ and that is truncated starting from a channel sequence *P*₁ or *P*₂, or a multi-channel sequence whose channel quantity is *K*₂ and that is truncated starting from a channel sequence *P*₃, also has a good correlation characteristic, the value set may be {*K*₁, *K*₂, *K*}, and index sets associated with values in the value set may be {*P*₁, *P*₂}, {*P*₃}, and {0} respectively. Therefore, the designed second sequence is equivalently implemented as a *K*-channel sequence, two *K*₁-channel sequences, and a *K*₂-channel sequence.

For example, the second sequence may be designed in an AI manner, or may be designed in another manner. This is not limited. In addition, a sequence set including *M K* - channel sequences may be designed, and *M* may be understood as a sequence capacity. The sequence set may include the second sequence. The M sequences have a same length, and the sequences meet a same truncation characteristic. That is, the sequences correspond to a same value set and a same value-associated index set. Further, short sequences at a same truncation position corresponding to different sequences in the sequence set have a good cross-correlation characteristic. For details, refer to the related descriptions in the first possible implementation. The details are not described herein again.

For example, two sequence sets may be designed, each sequence set includes 10 12-channel sequences, and a length of each channel sequence is 280. It is assumed that, during design of a first sequence set, the correlation performance of a truncated multi-channel sequence is not considered; and during design of a second sequence set, the correlation performance of an entire 12-channel sequence is considered, and the correlation performance of first four channel sequences and first eight channel sequences is also considered. Therefore, when first four channel sequences in each sequence in the first sequence set are used as a truncated multi-channel sequence set, for each sequence in the multi-channel sequence set, an autocorrelation ambiguity peak sidelobe is - 62 dB, and a cross-ambiguity peak sidelobe is -21.5 dB. When first four channel sequences in each sequence in the second sequence set are used as a truncated multi-channel sequence set, for each sequence in the multi-channel sequence set, an auto-ambiguity peak sidelobe is -68.3 dB, and a cross-ambiguity peak sidelobe is -26.7 dB.

When correlation characteristics of the truncated multi-channel sequence sets corresponding to the first sequence set and the second sequence set are analyzed, a carrier frequency is 60 GHz, a subcarrier spacing is 240 kHz, a Doppler shift is 1667 Hz, and a sending interval between adjacent channel sequences is 2 slots (0.125 milliseconds).

It can be learned from the foregoing two possible implementations that the value set and the index set are determined based on a truncation position considered during sequence design, so that a truncated sequence has a good correlation characteristic.

In a possible implementation, the value set includes a base value, each value in the value set is an integer multiple of the base value, and the base value is a positive integer. Each index in the index set is a non-negative integer multiple of the base value.

In a possible implementation, when the value set is a length set, the base value may be understood as a base length. For example, if the base value is *L*₁, a value in the value set may be represented as *Lᵢ* = *Nᵢ* × *L*₁, where *Nᵢ* is a positive integer. Based on the example shown in FIG. 3, it is assumed that *L*₂ = 2*L*₁, and *L* = 4*L*₁, the value set may be represented as {*L*₁, 2*L*₁, 4*L*₁}, and *Nᵢ* corresponding to the value set is {1,2,4}. A plurality of *Nᵢ* may form a length multiple set, for example, {1,2,4} may be understood as a length multiple set.

When the value set is a length set and the index set is an element index set, each element in an index set *Pᵢ* associated with the value *Lᵢ* may be represented as *P_{i,j} = M_{i,j}* × *L*₁, where *M_{i,j}* is a non-negative integer, that is, *M_{i,j}* is 0 or a positive integer. In this case, the index set may be indicated by using a multiple set *Mᵢ* = {*M*_{*i,*1}, *..., M_{i,j},* ... , *M_{i,J}*}*,* and *J* represents an element quantity of the index set.

For example, based on the example shown in FIG. 3, it is assumed that *L*₁ is the base value, *L*₂ = 2*L*₁, and *L* = 4*L*₁, an index set associated with *L*₁ may be represented as {0,*L*₁}*,* and a corresponding multiple set is *M*₁ = {0,1}; an index set associated with *L*₂ is {2*L*₁}, and a corresponding multiple set is *M*₂ = {2}; and an index set associated with L and a multiple set are *M*₃ = {0}.

Optionally, the base length corresponds to a minimum bandwidth that is allowed to be occupied by a reference signal. For example, the minimum bandwidth is 25 MHz in a frequency range 1 (frequency range 1, FR1), and is 100 MHz or 50 MHz in a frequency range 2 (frequency range 2, FR2). Alternatively, the base length corresponds to a minimum granularity of a reference signal frequency domain resource.

For example, that the base length corresponds to the minimum bandwidth occupied by the reference signal may be understood as: The minimum bandwidth occupied by the reference signal is a bandwidth corresponding to contiguous or non-contiguous subcarriers or resource elements (resource elements, REs) whose quantity is the base length. That the base length corresponds to the minimum granularity of the reference signal frequency domain resource may be understood as: The minimum granularity of the reference signal frequency domain resource is subcarriers or REs whose quantity is the base length, and the REs whose quantity is the base length may be continuously distributed in frequency domain or may be discontinuously distributed at a specific comb size.

For example, one RE corresponds to one subcarrier in frequency domain. Therefore, in this embodiment of this application, the subcarrier or the RE may be understood as a same meaning, and the subcarrier and the RE may be replaced with each other.

Optionally, the length L of the second sequence may be an integer multiple of the base length *L*₁, or may be a non-integer multiple of the base length. *L*/*L*₁ is less than or equal to a preset threshold, or $\left⌊L/{L}_{1}\right⌋$ less than or equal to the preset threshold, and └ ┘ represents rounding down. For example, *L*/*L*₁ or $\left⌊L/{L}_{1}\right⌋$ is equal to 4, 6, 8, or the like.

In another possible implementation, when the value set is a channel quantity set, the base value may be understood as a base channel quantity. For example, if the base value is *K*₁, a value in the value set may be represented as *Kᵢ = Nᵢ* × *K*₁, where *Nᵢ* is a positive integer. Based on the example shown in FIG. 4, it is assumed that *K*₁ = 2, the value set may be represented as {2,2 × 2,2 × 3}, and *Nᵢ* corresponding to the value set is {1,2,3}. A plurality of *Nᵢ* may form a channel quantity multiple set, for example, {1,2,3} may be understood as a channel quantity multiple set.

When the value set is a channel quantity set and the index set is a channel index set, each element in an index set *Pᵢ* associated with the value *Kᵢ* may be represented as *P_{i,j}* = *M_{i,j}* × *K*₁, where *M_{i,j}* is a non-negative integer, that is, *M_{i,j}* is 0 or a positive integer. In this case, the index set may be indicated by using a multiple set *Mᵢ* = {*M*_{*i,*1}, *..., M_{i,j}, ..., M_{i,J}*}, and *J* represents an element quantity of the index set.

For example, based on the example shown in FIG. 4, it is assumed that *K*₁ = 2 is the base value, an index set associated with *K*₁ = 2 may be represented as {0,2} , and a corresponding multiple set is *M*₁ = {0,1}; an index set associated with *K*₂ = 4 is {2}, and a corresponding multiple set is *M*₁ = {1}; and an index set associated with L and a multiple set are *M*₃ = {0}.

Optionally, the channel quantity K of the second sequence may be an integer multiple of the base channel quantity *K*₁, or may be a non-integer multiple of the base channel quantity. *K*/*K*₁ is less than or equal to a preset threshold, or $\left⌊K/{K}_{1}\right⌋$ less than or equal to the preset threshold, and └ ┘ represents rounding down. For example, *K*/*K*₁ or $\left⌊K/{K}_{1}\right⌋$ is equal to 2, 4, 6, or the like.

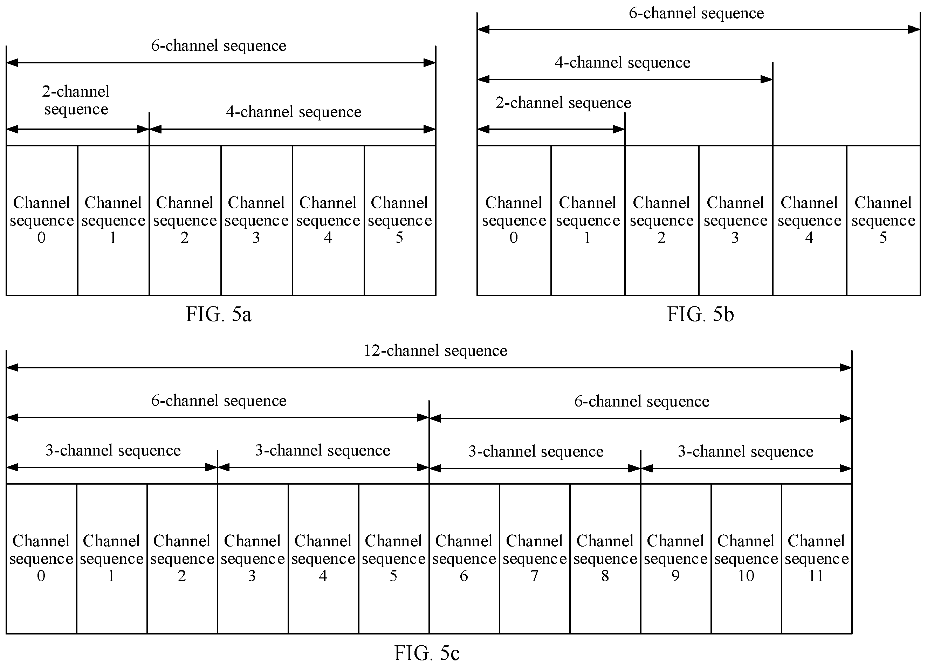

It may be understood that the example shown in FIG. 4 is merely an implementation of the channel quantity of the second sequence, the value set, and the index set. During actual application, there may be another sequence design. For example, the channel quantity of the second sequence is 4, 8, 12, or the like, and the value set and the index set may also have other implementations. For example, FIG. 5a to FIG. 5c show a design of the value set and the index set when the channel quantity of the second sequence is 6 and 12.

As shown in FIG. 5a, the value set is {2,4,6}, and index sets associated with values in the value set are {0}, {2}, and {0} respectively. As shown in FIG. 5b, the value set is {2,4,6}, and index sets associated with values in the value set are all {0}. As shown in FIG. 5c, the value set is {3,6,12}, and index sets associated with values in the value set are {0,3,6,9}, {0,6}, and {0} respectively.

Optionally, in this embodiment of this application, the base value may be predefined in a protocol, or may be configured by the RAN node. This is not specifically limited in this application. In addition, the base value may have another name, for example, the base length or the base channel quantity. This is not limited.

In a possible implementation, the value set and the index set associated with the value in the value set meet at least one of the following a, b, or c:
a. There is no intersection between index sets associated with different values in the value set.

In a possible implementation, when the value set does not include the length of the second sequence or the channel quantity of the second sequence, there is no intersection between the index sets associated with different values in the value set. When the value set includes the length of the second sequence or the channel quantity of the second sequence, there is no intersection between index sets associated with values other than the length of the second sequence or the channel quantity of the second sequence in the value set.

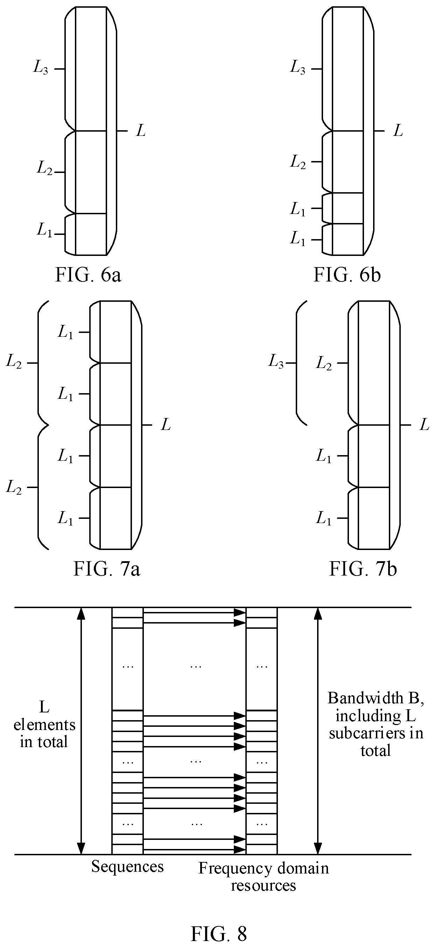

For example, as shown in FIG. 6a, an example in which *L*₂ = 2*L*₁, and *L*₃ = 3*L*₁ is used, the value set is {*L*₁, *L*₂, *L*₃}, an index set associated with *L*₁ is {0}, an index set associated with *L*₂ is {*L*₁}, and an index set associated with *L*₃ is {3*L*₁}. As shown in FIG. 6b, an example in which *L*₂ = 2*L*₁, and *L*₃ = 3*L*₁ is used, the value set is {*L*₁, *L*₂, *L*₃}*,* an index set associated with *L*₁ is {0, *L*₁}, an index set associated with *L*₂ is {2*L*₁}, and an index set associated with *L*₃ is {4*L*₁}. It may be understood that in FIG. 6a and FIG. 6b, L are the same, and *L*₁ are different. In the example shown in FIG. 6a and FIG. 6b, there is no intersection between index sets associated with different values other than L.

Based on the manner a, different sequences obtained by truncating the second sequence from different positions do not overlap each other, thereby ensuring the correlation performance of each truncated sequence.

b. An element in the index set associated with the value in the value set includes *Cᵢ* × *Xᵢ. Xᵢ* is an *i*^{th} element in the value set, or is a sequence length or a channel quantity indicated by the *i*^{th} element, ${C}_{i} = 0 , 1 , … , \left⌊\frac{X}{{X}_{i}}\right⌋ - 1$, *X* is the length of the second sequence or the channel quantity of the second sequence, i = *1,2 ..., N, N* is a total quantity of values included in the value set, and └ ┘ represents rounding down.

That is, an index set associated with a value other than the length or the channel quantity of the second sequence in the value set is determined based on the value *Xᵢ* and the length or the channel quantity *X* of the second sequence. When the value set is a length set, *X* is the length of the second sequence, and the length of the second sequence may also be represented as *L;* or when the value set is a channel quantity set, *X* is the channel quantity of the second sequence, and the channel quantity of the second sequence may also be represented as *K*.

For example, as shown in FIG. 7a, an example in which the value set is {*L*₁, *L*₂}, and *L*₂ = 2*L*₁ is used, 4 is obtained by rounding *L*₁ by *L*, and therefore an index set associated with *L*₁ is {0, *L*₁, 2*L*₁, 3*L*₁} ; and 2 is obtained by rounding *L*₂ by *L* , and therefore an index set associated with *L*₁ is {0,*L*₂}.

c. The value set includes the base value and a second value. There is no intersection between an index set associated with the second value and an index set associated with the base value. That is, the value set includes at least one value, and there is no intersection between an index set associated with the at least one value and the index set associated with the base value. For the base value, refer to the foregoing related descriptions. Details are not described herein again.

For example, as shown in FIG. 7b, an example in which the value set is {*L*₁, *L*₁, *L*₃} and the base length is *L*₁ is used. An index set associated with *L*₁ is {0, *L*₁} , an index set associated with *L*₂ is {2*L*₁} , and an index set associated with *L*₃ is {*L*₁} . There is no intersection between the index set {2*L*₁} associated with *L*₂ and the index set {0,*L*₁} associated with *L*₁.

Based on the manner c, a sequence whose length is the base value does not overlap a sequence whose length is the second value, thereby ensuring the correlation performance of the sequences of the two lengths.

In a possible implementation, there may be a mapping relationship between resources and sequences, values in the value set, and indexes in index sets associated with the values. In other words, a resource used to carry a signal is associated with a sequence, a value in the value set, and an index in an index set associated with the value. For example, the first communication apparatus sends the first signal on the first resource, and the first resource may have the following three implementations:

Manner 1. A quantity of frequency domain resource units included in the first resource is the first value. An index of a starting frequency domain resource unit of the first resource is the first index or a product of the first index and a comb size (comb size). The comb size is a positive integer greater than 1.

For example, Manner 1 may be applied to a scenario in which the value set is a length set, and the index set associated with the value in the value set is an element index set.

The quantity of frequency domain resource units included in the first resource may be understood as the length of the first resource. For example, the frequency domain resource unit may be a subcarrier or an RE.

For example, if the first value is *L'*, the first index is *P'*, and the frequency domain resource unit is a subcarrier, a start position of the first resource is a subcarrier *P*'; or when comb mapping is performed, a start position of the first resource is the subcarrier *P'* × comb size. In addition, the first resource includes *L'* subcarriers in total from the start position, and the *L'* subcarriers may be continuously distributed in frequency domain or may be discontinuously distributed at the comb size.

In a possible implementation, a frequency domain resource of the first resource may be a resource in a bandwidth B. The bandwidth B may be a bandwidth of a carrier, an aggregated bandwidth of a plurality of carriers, a bandwidth of a bandwidth part (bandwidth part, BWP), or a bandwidth of a resource pool. This is not limited. For example, the bandwidth B in FR1 may be, for example, 100 MHz, and the bandwidth B in FR2 may be, for example, 400 MHz.

In a possible implementation, a subcarrier 0 may be a subcarrier corresponding to the Ponit A, a 1^{st} subcarrier of a common resource block (common resource block, CRB) 0, a 1^{st} subcarrier of a BWP, that is, a 1^{st} subcarrier of a physical resource block (physical resource block, PRB) 0, or a 1^{st} subcarrier of a resource pool.

Optionally, the length of the second sequence may be designed based on a given bandwidth B. For example, a quantity of subcarriers or REs included in the bandwidth B at a specific subcarrier spacing may be determined, to design the length of the second sequence.

In a possible implementation, when the bandwidth B includes *L* subcarriers, the length of the second sequence is greater than or equal to *L*. As shown in FIG. 8, each subcarrier in the bandwidth B may be used to map one sequence element. Therefore, when a part of elements in the second sequence are selected as the first sequence, the first signal may be sent on subcarriers corresponding to the part of elements.

In addition, when a plurality of devices need to simultaneously send signals at a same frequency domain position in the bandwidth B, the plurality of devices may truncate short sequences corresponding to the frequency domain position from different sequences in a sequence set, generate the signals based on the short sequences, and send the signals. For example, if a device A and a device B need to send signals simultaneously on the subcarrier 0 to a subcarrier *L*₁ - 1 , the device A may truncate a sequence whose length is *L*₁ (denoted as a sequence a) starting from an element 0 of a sequence A, generate a signal based on the sequence a, and send the signal on the carrier 0 and the subcarrier *L*₁ - 1; and the device B may truncate a sequence whose length is *L*₁ (denoted as a sequence b) starting from an element 0 of a sequence B, generate a signal based on the sequence b, and send the signal on the carrier 0 to the subcarrier *L*₁ - 1. The sequence A and the sequence B belong to a same sequence set. For the sequence set, refer to the related descriptions of the first sequence set and the second sequence set. Details are not described herein again.

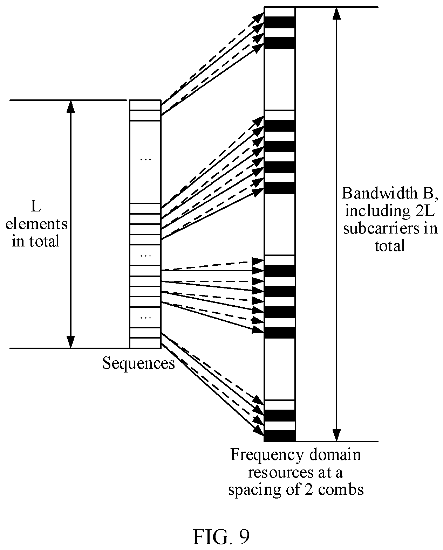

In another possible implementation, the length of the second sequence is determined based on the quantity of subcarriers included in the bandwidth B and the comb size. For example, the length of the second sequence may be greater than or equal to a value obtained by dividing the quantity of subcarriers in the bandwidth B by the comb size. In this scenario, every *Y* subcarriers in the bandwidth B may be used to map one sequence element, that is, the sequence element is mapped to non-contiguous subcarriers, and *Y* is the comb size. The comb size may be 2, 4, 6, 8, 12, or the like. As shown in FIG. 9, an example in which the comb size is equal to 2 is used for description.

For example, if the bandwidth B is 400 MHz and the subcarrier spacing is 120 kHz, the bandwidth B includes about 3333 subcarriers in total. If the comb size is 12, the length of the second sequence may be greater than or equal to 278. For example, the length of the second sequence may be 280.

Optionally, in the foregoing two possible implementations, when the second sequence is designed, in addition to the correlation performance of the entire second sequence, the correlation performance of short sequences of various lengths truncated from the second sequence also needs to be considered, to ensure bandwidths supported by different devices and bandwidth requirements of different sensing services.

Manner 2. A quantity of time units included in the first resource is the first value. An index of a starting time unit of the first resource satisfies: *P'* = *t*%*K*, where *t* is the index of the starting time unit of the first resource, *K* is the channel quantity of the second sequence, *P'* is the first index, and % represents a modulo operation.

For example, Manner 2 may be applied to a scenario in which the value set is a channel quantity set, and the index set associated with the value in the value set is a channel index set of a multi-channel sequence.

The quantity of time units included in the first resource may be understood as the length of the first resource. For example, the time unit may be an OFDM symbol, an OFDM symbol group, a slot, a mini-slot, or the like.

For example, if the first value is *K'* and the first index is *P'*, the index *t* of the starting time unit of the first resource satisfies *P'* = *t*%*K*. In addition, the first resource includes *K'* time units in total from a start position, and the *K'* time units may be continuously distributed in time domain or may be discontinuously distributed. Based on the example shown in FIG. 4, an example in which the first value is *K'* = 4 and the first index is *P'* = 2 is used. In this case, the first resource includes four time units, the index *t* of the starting time unit of the first resource satisfies *t*%6 = 2. For example, the index *t* of the starting time unit of the first resource is 2, 8, 14, or the like.

In a possible implementation, during actual application, not all time units are used to send reference signals. Therefore, in this embodiment of this application, an index of a time unit is not an index of a physical time unit or a physical index of the time unit, but is an index of the time unit in a set including a plurality of time units used to send a reference signal.

For example, the plurality of time units used to send a reference signal may form a logical time unit set, and the index of the time unit described in this specification is an index of the time unit in the logical time unit set or a logical index of the time unit.

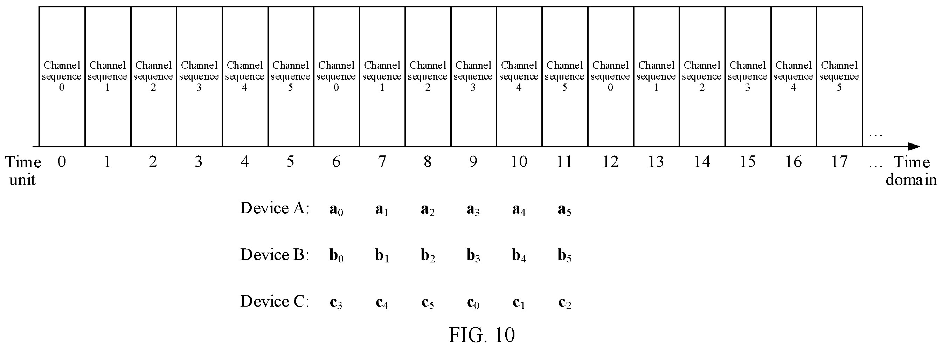

For example, as shown in FIG. 10, 0 to 17 may be understood as logical indexes of time units. There may be another time unit between time units corresponding to adjacent indexes shown in FIG. 10. For example, there may be a time unit used to send data between the time unit 2 and the time unit 3 shown in FIG. 10.

For example, the logical time unit set may be evenly distributed in physical time (or absolute time, for example, coordinated universal time (coordinated universal time, UTC)). For example, a physical time interval between the time unit 0 and the time unit 1 shown in FIG. 10 is equal to a physical time interval between the time unit 1 and the time unit 2.

For example, a case that when the index of the time unit is a logical index, the *K'* time units may be continuously distributed in time domain or may be discontinuously distributed may be understood as: The *K'* time units may be continuously distributed in the logical time unit set or may be discontinuously distributed. When the *K'* time units are discontinuously distributed, differences between logical indexes of any two time units among the *K'* time units are equal and greater than 1.

In a possible implementation, a time unit *i* is used to map or send a channel sequence *k* of the second sequence, where *k* = *i*%*K*, *K* is the channel quantity of the second sequence, and % represents a modulo operation.

For example, based on the example shown in FIG. 10, an example in which the channel quantity of the second sequence is *K* = 6 is used. Based on *k* = *i*%*K*, the time unit 0 to the time unit 5 are respectively used to map a channel sequence 0 to a channel sequence 5 of the second sequence, the time unit 6 to the time unit 11 are respectively used to map the channel sequence 0 to the channel sequence 5 of the second sequence, and so on.

In addition, devices in a system have a unified understanding of a mapping relationship between multi-channel sequences and time units, to ensure a good cross-correlation characteristic between the multi-channel sequences. For example, the mapping relationship between multi-channel sequences and time units may be configured by a RAN node to terminals by using a broadcast message, or may be predefined in a protocol.

For example, based on the example shown in FIG. 10, it is assumed that the device A and the device B respectively select two multi-channel sequences A and B that belong to a same sequence set, channel quantities of the sequence A and the sequence B are both 6, the sequence A and the sequence B are respectively represented as [***a***₀, ***a***₁, ***a***₂, ***a***₃, ***a***₄, ***a***₅] and [***b***₀, ***b***₁, ***b***₂, ***b***₃, ***b***₄, ***b***₅], and the channel sequences 0 to 5 are respectively mapped to the time units 6 to 11 based on the mapping relationship of *k* = *i*%*K*. If a device C selects a sequence C in the sequence set, the sequence C is represented as [***c***₀, ***c***₁, ***c***₂, ***c***₃, ***c***₄, ***c***₅], but when channel sequences 3, 4, 5, 0, 1, and 2 are respectively mapped to the time units 6 to 11, the device C does not perform mapping based on the foregoing mapping relationship, it cannot be ensured that a signal sent by the device C has a good cross-correlation characteristic with a signal sent by the device A or the device B.

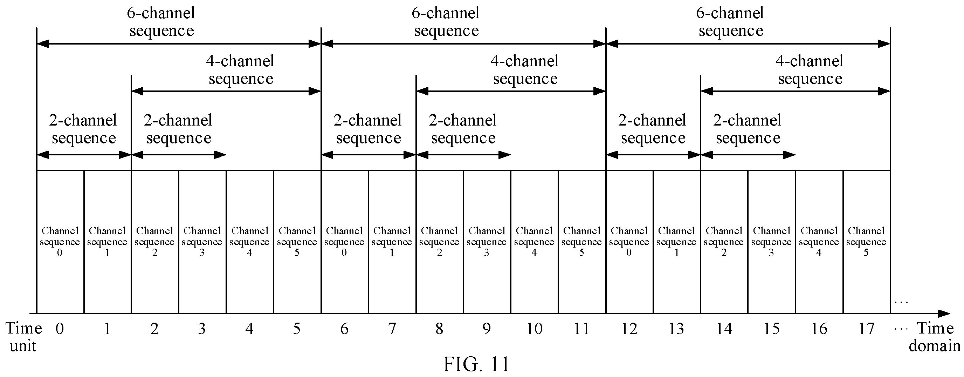

For example, based on the example shown in FIG. 10, if the channel quantity of the second sequence is *K* =6, the value set is {2,4,6}, and index sets associated with values in the value set are {0,2} , {2} , and {0} respectively, the mapping relationship between channel sequences and time units may be shown in FIG. 11.

In addition, different devices may be located in different cells, for example, different devices have different serving cells or camped cells. For example, the device A and the device B respectively camps on a cell A and a cell B. To reduce mutual interference as much as possible when devices in different cells simultaneously send signals, different multi-channel sequences in a multi-channel sequence set may be allocated to different cells for use. For example, the RAN node may configure different multi-channel sequences in the same multi-channel sequence set for terminals in different cells. To ensure a good cross-correlation characteristic between the multi-channel sequences used by the devices in different cells, in different cells, a same logical time unit set and a corresponding mapping relationship may be configured for the multi-channel sequence set.

Manner 3. A quantity of frequency domain resource units included in the first resource is a product of the first value and the length of the second sequence. An index of a starting frequency domain resource unit of the first resource is a product of the first index and the length of the second sequence, or a product of the first index, the length of the second sequence, and a comb size.

The second sequence is a multi-channel sequence, the length of the second sequence is a length of any channel sequence included in the second sequence, and the comb size is a positive integer greater than 1. The quantity of frequency domain resource units included in the first resource may be understood as the length of the first resource.

For example, Manner 3 may be applied to a scenario in which the value set is a channel quantity set, and the index set associated with the value in the value set is a channel index set of a multi-channel sequence.

It may be understood that, in Manner 2, different channel sequences of the first sequence are mapped to different time units, and further, the different channel sequences are mapped to a same frequency domain resource; and in Manner 3, different channel sequences of the first sequence are mapped to different frequency domain resources, and further, the different channel sequences are mapped to a same time unit.

In Manner 3, a larger channel quantity of the first sequence indicates a larger quantity of frequency domain resource units required for sending sequences, that is, a larger bandwidth needs to be occupied. Considering that different devices may support different bandwidth capabilities, or different sensing services have different requirements on sensing precision, a part or all of channel sequences of the second sequence may be flexibly truncated based on the value set and the index set as the first sequence, to meet requirements of different devices or sensing services, and ensure the correlation performance of the first sequence.

Optionally, in Manner 3, there is a mapping relationship between channel sequences and frequency domain resources. For example, the bandwidth B is used to map a *K* -channel sequence whose length is *Lₓ*, that is, the bandwidth B is used to map *Lₓ* × *K* elements of the multi-channel sequence. *Lₓ* is the length of the second sequence or the first sequence. *Lₓ* may also be understood as a base length, and may be equal to *L*₁.

For example, each subcarrier in the bandwidth B may be used to map one element among the *Lₓ* × *K* elements, or every *Y* subcarriers may be used to map one element among the *L*ₓ × *K* elements, and *Y* is the comb size. In addition, an element quantity *Lₓ* × *K* of the multi-channel sequence may be greater than or equal to a quantity of subcarriers included in the bandwidth B at a specific subcarrier spacing, or greater than or equal to a value obtained by dividing a quantity of subcarriers included in the bandwidth B at a specific subcarrier spacing by the comb size. For details, refer to the related descriptions in Manner 1. The details are not described herein again.

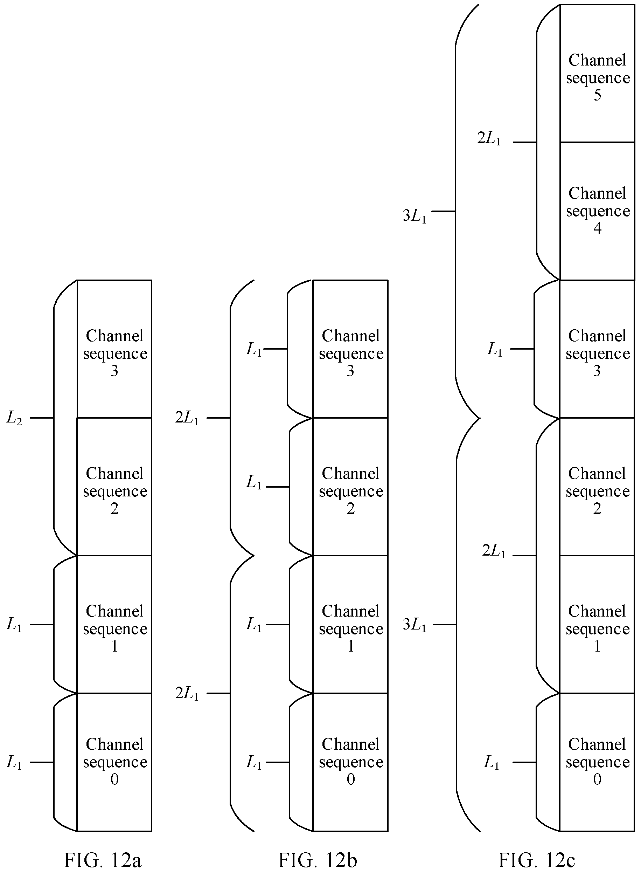

For example, if the channel quantity of the second sequence is 6, the length of the second sequence is *L*₁, and comb multiplexing is not performed, when the value set is {1,2}, and index sets associated with values in the value set are {0,1} and {2} respectively, a mapping relationship of channel sequences on frequency domain resources may be shown in FIG. 12a. Refer to FIG. 12a. When the first value is 1 and the first index is 1, a quantity of subcarriers included in the first resource is 1 × *L*₁, and the index of the starting frequency domain resource unit of the first resource is 1 × *L*₁.

When the value set is {1,2}, and index sets associated with values in the value set are {0,1,2,3} and {0,2} respectively, a mapping relationship of channel sequences on frequency domain resources may be shown in FIG. 12b. Refer to FIG. 12b. When the first value is 2 and the first index is 0, a quantity of subcarriers included in the first resource is 2 × *L*₁, and the index of the starting frequency domain resource unit of the first resource is 0 × *L*₁ = 0.

When the value set is {1,2,3}, and index sets associated with values in the value set are {0,3} , {1,4} , and {0,3} respectively, a mapping relationship of channel sequences on frequency domain resources may be shown in FIG. 12c. Refer to FIG. 12c. When the first value is 2 and the first index is 4, a quantity of subcarriers included in the first resource is 2 × *L*₁, and the index of the starting frequency domain resource unit of the first resource is 4 × *L*₁.

It should be noted that the foregoing Manner 1 and Manner 2 may be implemented independently, or may be combined with each other. For example, when the second sequence and the first sequence are multi-channel sequences, frequency domain resources of the first resource may be determined based on Manner 1, and time domain resources of the first resource may be determined based on Manner 2. For details, refer to the descriptions in Manner 1 and Manner 2. The details are not described herein again.

The foregoing describes in detail a sequence truncation manner provided in this application. The following describes application procedures of the foregoing communication manner in various scenarios. For example, there may be the following three scenarios:

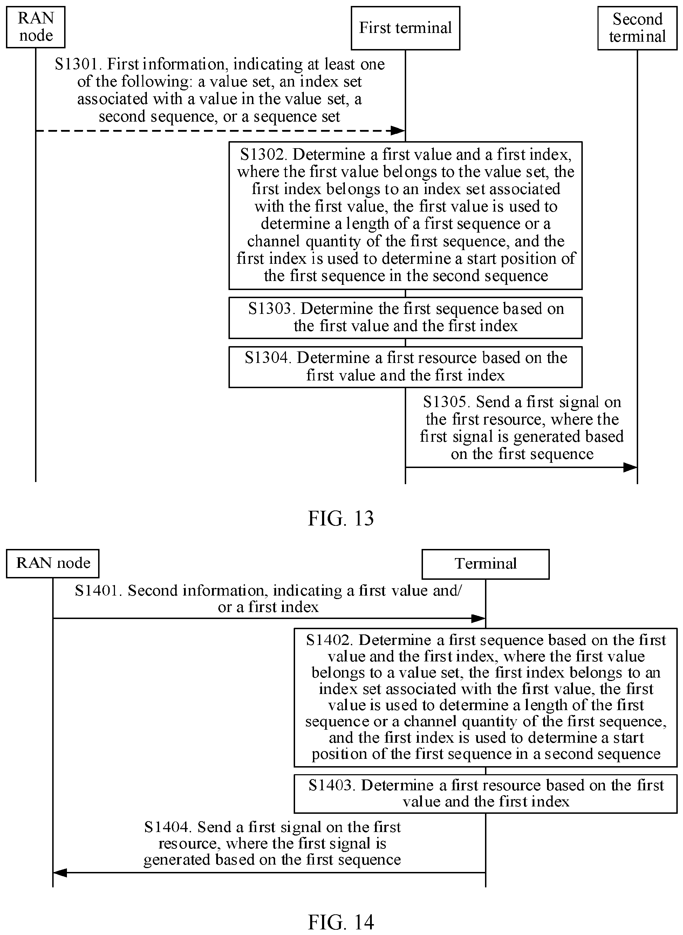

Scenario 1. The first communication apparatus and the second communication apparatus are terminals. The first communication apparatus and the second communication apparatus may be the same or may be different. In this scenario, as shown in FIG. 13, an example in which the first communication apparatus is a first terminal and the second communication apparatus is a second terminal is used. An application procedure of the foregoing method may include the following steps.

S1301. A RAN node sends first information. Correspondingly, the first terminal receives the first information from the RAN node.

The first information is used to configure or indicate at least one of the following: a value set, an index set associated with a value in the value set, a second sequence, or a sequence set. The second sequence belongs to the sequence set.

For example, when the RAN node indicates a plurality of items of the value set, the index set associated with the value in the value set, the second sequence, or the sequence set, the RAN node may indicate the plurality of items by using one piece of information, or may indicate the plurality of items by using a plurality of pieces of information. That is, the first information may be one piece of information, or may be a general term of a plurality of pieces of information.

In a possible implementation, sequences in the sequence set meet a same truncation characteristic. For details, refer to the foregoing related descriptions of the sequence set. When the RAN node indicates the sequence set, the sequence set may be determined by the RAN node. For example, the RAN node obtains the sequence set through training in an AI manner. Alternatively, the sequence set may be predefined in a protocol. This is not specifically limited in this application.

For example, when the sequence set is determined by the RAN node, the first information may include each sequence in the sequence set. When the sequence set is defined in a protocol, the first information may include an index of the sequence set. The RAN node may indicate the sequence set by using a broadcast message.

When the RAN node does not indicate the sequence set, the sequence set may be preconfigured. For example, the sequence set is preconfigured upon delivery of the first terminal. In addition, when only one sequence set is defined in the protocol, the RAN node may not indicate the sequence set, and a default sequence set of the first terminal is the sequence set defined in the protocol.

In a possible implementation, the second sequence is a sequence in the sequence set. When the RAN node indicates the second sequence, the first information may include an index of the second sequence in the sequence set. When the RAN node does not indicate the second sequence, the first terminal may determine the second sequence from the sequence set.

In a possible implementation, the value set may include a length set and/or a channel quantity set. For details, refer to the foregoing related descriptions. When the RAN node indicates the value set, the value set may be determined by the RAN node, or the value set may be predefined in a protocol. This is not specifically limited in this application.

For example, when the value set is determined by the RAN node, the first information may include each value in the value set, or the first information may include a base length/a base channel quantity and a multiple set. For details, refer to the foregoing related descriptions. The details are not described herein again. When the value set is defined in a protocol, the first information may include an index of the value set. The RAN node may indicate the value set by using a broadcast message.

When the RAN node does not indicate the value set, the value set may be preconfigured. For example, the value set is preconfigured upon delivery of the first terminal. In addition, when only one value set is defined in the protocol, the RAN node may not indicate the value set, and a default value set of the first terminal is the value set defined in the protocol.

In a possible implementation, the index set may include an element index set and/or a channel index set. For details, refer to the foregoing related descriptions. For an implementation in which the RAN node indicates or does not indicate the index set, refer to the related descriptions in which the RAN node indicates or does not indicate the value set. Details are not described herein again.

As described above, the first information may indicate one or more of the value set, the index set, the second sequence, or the sequence set, and a parameter that is not indicated by the first information may be defined in a protocol or preconfigured. Alternatively, the first information may not indicate the value set, the index set, the second sequence, and the sequence set. In this case, the value set, the index set, and the sequence set may be defined in a protocol or preconfigured, and the second sequence may be determined by the first terminal. That is, step S1301 is an optional step.

It may be understood that, when the first information is broadcast information, the second terminal may also receive the first information, and obtain at least one of the value set, the index set associated with the value in the value set, the second sequence, or the sequence set.

S1302. The first terminal determines a first value and a first index.

In a possible implementation, the first value is determined by the first terminal from the value set. In this scenario, if the first terminal and the second terminal are different devices, the first terminal may further indicate, to the second terminal, the first value determined by the first terminal, so that the second terminal determines the first sequence.

In another possible implementation, the first value is indicated by the RAN node to the first terminal. In this scenario, before step S1302, the method may further include: The RAN node sends second information, and correspondingly, the first terminal receives the second information from the RAN node. The second information indicates the first value.

For example, the second information may include the first value; the second information may include a first multiple, where the first value is a product of a base value and the first multiple, and the base value may be defined in a protocol or configured by the RAN node; or the second information may include an index of the first value in the value set.

For example, based on the example shown in FIG. 3, the value set includes {*L*₁, *L*₂, *L*}, and indexes of the three values in the value set may be 0, 1, and 2, or may be 1, 2, and 3. If the first value is *L*₁, the second information may include the first value *L*₁, or a first multiple of 1, or an index 0 (or 1) of the first value.

For another example, based on the example shown in FIG. 4, the value set includes {2,4,6}, and indexes of the three values in the value set may be 0, 1, and 2, or may be 1, 2, and 3. If the first value is 2, the second information may include the first value 2, or a first multiple of 1, or an index 0 (or 1) of the first value.

In addition, if the first terminal and the second terminal are different devices, and the second information is unicast information, the first terminal may further indicate the first value to the second terminal. Alternatively, when the second terminal is not in coverage of the RAN node, the first terminal may indicate the first value to the second terminal.

In a possible implementation, the first index is determined by the first terminal from an index set associated with the first value. In this scenario, if the first terminal and the second terminal are different devices, the first terminal may further indicate, to the second terminal, the first index determined by the first terminal, so that the second terminal determines the first sequence.

In another possible implementation, the first index is indicated by the RAN node to the first terminal. In this scenario, before step S1302, the method may further include: The RAN node sends second information, and correspondingly, the first terminal receives the second information from the RAN node. The second information indicates the first index.

For example, the second information may include the first index; the second information may include a second multiple, where the first index is a product of a base value and the second multiple, and the base value may be defined in a protocol or configured by the RAN node; or the second information may include an index of the first index in the index set.

For example, based on the example shown in FIG. 3, it is assumed that the first value is *L*₁, an index set associated with the first value is {0, *L*₁}, and indexes of the two indexes in the index set may be 0 and 1, or may be 1 and 2. If the first index is *L*₁, the second information may include the first index *L*₁, or a second multiple of 1, or an index 1 (or 2) of the first index in the index set.

For another example, based on the example shown in FIG. 4, it is assumed that the first value is 2, an index set associated with the first value is {0,2}, and indexes of the two indexes in the index set may be 0 and 1, or may be 1 and 2. If the first index is 2, the second information may include the first index 2, or a second multiple of 1, or an index 1 (or 2) of the first index in the index set.

In addition, the first terminal may alternatively indicate the first index to the second terminal. For details, refer to the related descriptions in which the first terminal indicates the first value to the second terminal. The details are not described herein again.

It may be understood that, whether the first terminal indicates the first value and/or the first index to the second terminal may be determined by the first terminal. For example, the first terminal may indicate the first value and/or the first index to the second terminal in any case or scenario. The foregoing scenario is used as an example for description, and does not constitute any limitation.

S1303. The first terminal determines the first sequence based on the first value and the first index. For details, refer to the related descriptions of the first sequence. The details are not described herein again.

S1304. The first terminal determines a first resource based on the first value and the first index. For details, refer to the related descriptions in Manner 1 to Manner 3. The details are not described herein again.

In a possible implementation, when a time domain position of the first resource is determined based on Manner 2, if the first value and the first index are determined by the terminal, a starting time unit of the first resource may be a 1^{st} time unit that satisfies *P'* = *t*%*K* after the first terminal determines the first value and the first index. *t* is an index of the starting time unit of the first resource, *K* is a channel quantity of the second sequence, *P'* is the first index, and % represents a modulo operation. For details, refer to the detailed descriptions in Manner 2. The details are not described herein again.

In another possible implementation, when a time domain position of the first resource is determined based on Manner 2, if the first value and the first index are indicated by the second information, a starting time unit of the first resource may be a 1^{st} time unit that satisfies *P'* = *t*%*K* after a time unit in which the second information is located. For details, refer to the detailed descriptions in Manner 2. The details are not described herein again.

S1305. The first terminal sends a first signal on the first resource. The second terminal receives the first signal on the first resource. For details, refer to the related descriptions in step S203. The details are not described herein again.

In a possible implementation, when the first terminal and the second terminal are different devices, before step S1305, the first terminal may indicate the first value, the first index, the second sequence, and the like to the second terminal, and the second terminal may determine the first resource based on the first value and the first index, and determine a local sequence (that is, the first sequence) based on the first value, the first index, and the second sequence, to perform related processing on a received sequence.

Scenario 2. The first communication apparatus is a RAN node, and the second communication apparatus is a terminal. Alternatively, the first communication apparatus is a terminal, and the second communication apparatus is a RAN node. In this scenario, as shown in FIG. 14, an application procedure of the foregoing method may include the following steps.

S1401. The RAN node sends second information to the terminal. Correspondingly, the terminal receives the second information from the RAN node. The second information indicates a first value and/or a first index.

In a possible implementation, the terminal may not sense existence of a value set and an index set. For example, the RAN node may determine the value set and the index set, determine the first value from the value set, determine the first index from an index set associated with the first value, and then indicate the first value and/or the first index to the terminal. For example, the second information may include the first value or a first multiple, and/or the first index or a second multiple. For details, refer to the related descriptions of the first multiple and the second multiple in step S1302. The details are not described herein again.

In another possible implementation, the terminal may sense existence of a value set and an index set. For example, the RAN node may indicate the value set and the index set to the terminal, the value set and the index set may be defined in a protocol, or the value set and the index set may be preconfigured in the terminal. For details, refer to the related descriptions in step S1301. The details are not described herein again.

In this implementation, for example, the second information may include an index of the first value in the value set and/or an index of the first index in the index set. For details, refer to the related descriptions in step S1302. The details are not described herein again.

Optionally, the second information may be carried in downlink control information (downlink control information, DCI). Certainly, the second information may alternatively be carried in other signaling, for example, radio resource control (radio resource control, RRC) signaling, a media access control control element (media access control control element, MAC CE), or the like. This is not limited.

S1402. The terminal determines a first sequence based on the first value and the first index.

In a possible implementation, the RAN node may preconfigure a second sequence for the terminal, for example, configure a sequence set and an index of the second sequence, or directly configure an element included in the second sequence. In step S1402, the terminal may determine the first sequence based on the first value, the first index, and the second sequence.

In another possible implementation, step S1402 may not be performed, and the RAN node may directly configure the first sequence for the terminal.

S1403. The terminal determines a first resource based on the first value and the first index. For details, refer to the related descriptions in Manner 1 to Manner 3. The details are not described herein again.

In a possible implementation, when a time domain position of the first resource is determined based on Manner 2, a starting time unit of the first resource may be a 1^{st} time unit that satisfies *P'* = *t*%*K* after a time unit in which the second information is located. *t* is an index of the starting time unit of the first resource, *K* is a channel quantity of the second sequence, *P'* is the first index, and % represents a modulo operation. For details, refer to the detailed descriptions in Manner 2. The details are not described herein again.

S1404. The RAN node sends a first signal on the first resource, and the terminal receives the first signal on the first resource. Alternatively, the terminal sends a first signal on the first resource, and the RAN node receives the first signal on the first resource.

It may be understood that, when the first communication apparatus is a RAN node, the RAN node sends the first signal, and the terminal receives the first signal. When the first communication apparatus is a terminal, the terminal sends the first signal, and the RAN node receives the first signal. In FIG. 14, an example in which the first communication apparatus is a terminal is used for description.

In a possible implementation, for the foregoing method embodiments, in a CU-DU architecture or an ORAN system, a function of interaction between the RAN node and the terminal may be implemented by a DU or an O-DU. Information sent by the RAN node to the terminal may be generated by the DU or the O-DU, or may be generated by a CU or an O-CU and sent to the DU or the O-DU. A processing function of the RAN node may be implemented by the CU or the O-CU, or may be implemented by the DU or the O-DU, or may be jointly implemented by the CU and the DU (or the O-CU and the O-DU). This is not limited.

The foregoing describes the methods provided in this application. In addition, this application further provides a communication apparatus to implement the functions described in the foregoing method embodiments.

It may be understood that, to implement the foregoing functions, the communication apparatus includes a hardware structure and/or a software module for performing a corresponding function. A person skilled in the art should easily be aware that, units and algorithm steps of the examples described with reference to embodiments disclosed in this specification can be implemented by electronic hardware or a combination of computer software and electronic hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

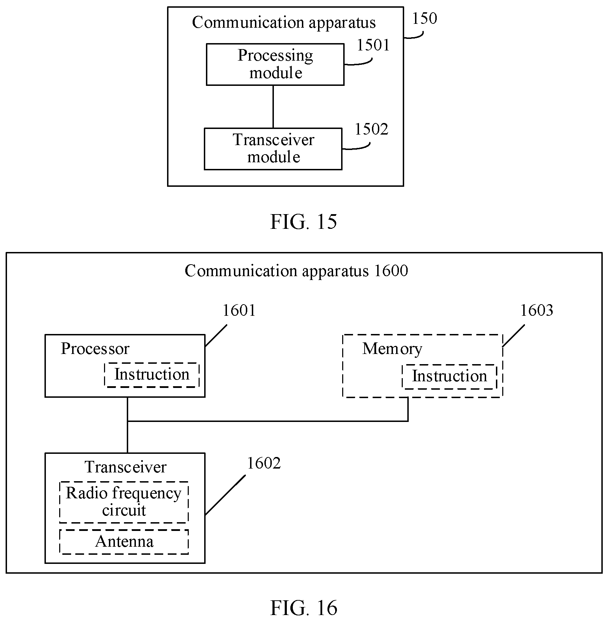

FIG. 15 is a diagram of a structure of a communication apparatus 150. The communication apparatus 150 includes a processing module 1501 and a transceiver module 1502. The communication apparatus 150 may be configured to implement a function of the first communication apparatus or the second communication apparatus.

In some embodiments, the communication apparatus 150 may further include a storage module (not shown in FIG. 15), configured to store program instructions and data.

In some embodiments, the transceiver module 1502 may also be referred to as a transceiver unit, and is configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving and sending steps performed by the first communication apparatus or the second communication apparatus in the foregoing method embodiments, and/or configured to support another process of the technology described in this specification. The processing module 1501 may be configured to perform a processing step performed by the first communication apparatus or the second communication apparatus in the foregoing method embodiments, and/or configured to support another process of the technology described in this specification.

When the communication apparatus 150 is configured to implement the function of the first communication apparatus or the second communication apparatus:

The processing module 1501 is configured to determine a first value and a first index; and the transceiver module 1502 is configured to send or receive a first signal, where the first signal is generated based on a first sequence. The first value is used to determine a length of the first sequence or a channel quantity of the first sequence, the first index is used to determine a start position of the first sequence in a second sequence, and the second sequence includes the first sequence. In addition, the first value belongs to a value set, and the first index belongs to an index set associated with the first value.

Optionally, the first value is the length of the first sequence, the value set is a length set, an index set associated with a value in the value set is an element index set, and the first value is less than or equal to a length of the second sequence; or the first value is the channel quantity of the first sequence, the value set is a channel quantity set of a multi-channel sequence, an index set associated with a value in the value set is a channel index set of the multi-channel sequence, and the first value is less than or equal to a channel quantity of the second sequence.

Optionally, the value set includes at least one or at least two values, each of the at least two values is associated with one index set, and the index set includes at least one index. For example, when the value set does not include the length or the channel quantity of the second sequence, the value set includes at least one value. When the value set includes the length or the channel quantity of the second sequence, the value set includes at least two values, and the at least two values include the length or the channel quantity of the second sequence.

Optionally, the value set includes a base value, each value in the value set is an integer multiple of the base value; and/or each index in the index set is a non-negative integer multiple of the base value; and the base value is a positive integer.

Optionally, the value set and the index set associated with the value in the value set meet at least one of the following: there is no intersection between index sets associated with different values in the value set; an element in the index set associated with the value in the value set includes *Cᵢ* × *Xᵢ* , where *Xᵢ* is a sequence length or a channel quantity indicated by an *i*^{th} element in the value set, ${C}_{i} = 0 , 1 , … , \left⌊\frac{X}{{X}_{i}}\right⌋ - 1$, *X* is the length of the second sequence or the channel quantity of the second sequence, *i* = 1,2 ... , *N*, *N* is a total quantity of values included in the value set, and 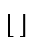 represents rounding down; or the value set includes the base value and a second value, there is no intersection between an index set associated with the second value and an index set associated with the base value, and the base value is a positive integer.

Optionally, the first value is further used to determine a length of a first resource, and the first index is further used to determine a start position of the first resource. In this scenario, that the transceiver module 1502 is configured to send or receive the first signal includes: The transceiver module 1502 is configured to send or receive the first signal on the first resource.

Optionally, a quantity of frequency domain resource units included in the first resource is the first value.

Optionally, an index of a starting frequency domain resource unit of the first resource is the first index; or an index of a starting frequency domain resource unit of the first resource is a product of the first index and a comb size, and the comb size is a positive integer greater than 1.

Optionally, the length of the first sequence is the first value; and an index of a 1^{st} element of the first sequence in the second sequence is the first index.

Optionally, a quantity of time units included in the first resource is the first value.

Optionally, an index of a starting time unit of the first resource satisfies: *P'* = *t*%*K*, where *t* is the index of the starting time unit of the first resource, *K* is the channel quantity of the second sequence, *P'* is the first index, and % represents a modulo operation.

Optionally, a quantity of frequency domain resource units included in the first resource is a product of the first value and the length of the second sequence, and the length of the second sequence is a length of any channel sequence included in the second sequence.

Optionally, an index of a starting frequency domain resource unit of the first resource is a product of the first index and the length of the second sequence; or an index of a starting frequency domain resource unit of the first resource is a product of the first index, the length of the second sequence, and a comb size, and the comb size is a positive integer greater than 1.

Optionally, the channel quantity of the first sequence is the first value; and a channel index of a 1^{st} channel sequence of the first sequence in the second sequence is the first index.

Optionally, the transceiver module 1502 is further configured to receive first information, where the first information indicates at least one of the following: the value set, the index set associated with the value in the value set, the second sequence, or a sequence set, where the second sequence belongs to the sequence set.

Optionally, the transceiver module 1502 is further configured to receive second information, where the second information indicates the first value and/or the first index.

Optionally, the second information includes the first value and/or the first index.

Optionally, the second information includes an index of the first value in the value set, and/or an index of the first index in the index set associated with the first value.

All related content of the steps in the foregoing method embodiments may be cited in function descriptions of the corresponding functional modules. Details are not described herein again.

In this application, the communication apparatus 150 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 150 in FIG. 15 is a chip or a chip system, a function/implementation process of the transceiver module 1502 may be implemented by using an input/output interface (or a communication interface) of the chip or the chip system, and a function/implementation process of the processing module 1501 may be implemented by using a processor (or a processing circuit) of the chip or the chip system.

The communication apparatus 150 provided in this embodiment may perform the foregoing methods. Therefore, for technical effect that can be achieved by the communication apparatus, refer to the foregoing method embodiments. Details are not described herein again.

In a possible product form, the first communication apparatus or the second communication apparatus in embodiments of this application may be implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described in this application.

In another possible product form, the first communication apparatus or the second communication apparatus in embodiments of this application may be implemented by using a general bus architecture. For ease of description, FIG. 16 is a diagram of a structure of a communication apparatus 1600 according to an embodiment of this application. The communication apparatus 1600 includes a processor 1601 and a transceiver 1602. The communication apparatus 1600 may be a first communication apparatus, or a chip or a chip system in the first communication apparatus; or the communication apparatus 1600 may be a second communication apparatus, or a chip or a module in the second communication apparatus. FIG. 16 shows only main components of the communication apparatus 1600. In addition to the processor 1601 and the transceiver 1602, the communication apparatus may further include a memory 1603 and an input/output apparatus (not shown in the figure).

Optionally, the processor 1601 is mainly configured to: process a communication protocol and communication data, control the entire communication apparatus, execute a software program, and process data of the software program, to implement the methods provided in the foregoing method embodiments. The memory 1603 is mainly configured to store a software program and data. The transceiver 1602 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in an electromagnetic wave form. The input/output apparatus, for example, a touchscreen, a display, or a keyboard, is mainly configured to: receive data input by a user and output data to the user.

Optionally, the processor 1601, the transceiver 1602, and the memory 1603 may be connected through a communication bus.

After the communication apparatus is powered on, the processor 1601 may read the software program in the memory 1603, execute instructions of the software program, and process data of the software program. When data needs to be sent wirelessly, the processor 1601 performs baseband processing on the to-be-sent data, and then outputs a baseband signal to the radio frequency circuit. The radio frequency circuit performs radio frequency processing on the baseband signal, and then sends, via the antenna, a radio frequency signal in an electromagnetic wave form. When data is sent to the communication apparatus, the radio frequency circuit receives a radio frequency signal via the antenna, converts the radio frequency signal into a baseband signal, and outputs the baseband signal to the processor 1601. The processor 1601 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 150 may be in a form of the communication apparatus 1600 shown in FIG. 16.

In an example, the processor 1601 in the communication apparatus 1600 shown in FIG. 16 may invoke computer-executable instructions stored in the memory 1603, to implement the function/implementation process of the processing module 1501 in FIG. 15. The transceiver 1602 in the communication apparatus 1600 shown in FIG. 16 may implement the function/implementation process of the transceiver module 1502 in FIG. 15.

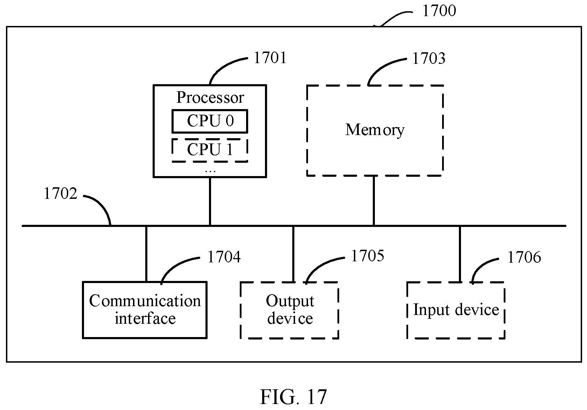

In still another possible product form, the first communication apparatus or the second communication apparatus in this application may use a composition structure shown in FIG. 17, or include components shown in FIG. 17. FIG. 17 is a diagram of composition of a communication apparatus 1700 according to this application. The communication apparatus 1700 may be a first communication apparatus, or a chip or a system on chip in the first communication apparatus; or may be a second communication apparatus, or a module, a chip, or a system on chip in the second communication apparatus.

As shown in FIG. 17, the communication apparatus 1700 includes at least one processor 1701 and at least one communication interface (in FIG. 17, only an example in which one communication interface 1704 and one processor 1701 are included is used for description). Optionally, the communication apparatus 1700 may further include a communication bus 1702 and a memory 1703.

The processor 1701 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 1701 may be another apparatus having a processing function, for example, a circuit, a component, or a software module. This is not limited.

The communication bus 1702 is configured to connect different components in the communication apparatus 1700, so that the different components can communicate with each other. The communication bus 1702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by only one bold line in FIG. 17, but this does not mean that there is only one bus or only one type of bus.

The communication interface 1704 is configured to communicate with another device or a communication network. For example, the communication interface 1704 may be a module, a circuit, a transceiver, or any apparatus that can implement communication. Optionally, the communication interface 1704 may alternatively be an input/output interface located in the processor 1701, and is configured to implement signal input and signal output of the processor.

The memory 1703 may be an apparatus having a storage function, and is configured to store instructions and/or data. The instructions may be a computer program.

For example, the memory 1703 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1703 may exist independently of the processor 1701, or may be integrated with the processor 1701. The memory 1703 may be located inside the communication apparatus 1700, or may be located outside the communication apparatus 1700. This is not limited. The processor 1701 may be configured to execute the instructions stored in the memory 1703, to implement a method provided in the following embodiments of this application.

Optionally, the processor 1701 and/or the memory 1703 may include an artificial intelligence (artificial intelligence, AI) module. The AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

In an optional implementation, the communication apparatus 1700 may further include an output device 1705 and an input device 1706. The output device 1705 communicates with the processor 1701, and may display information in a plurality of manners. For example, the output device 1705 may be a liquid crystal display (liquid crystal display, LCD), a light-emitting diode (light-emitting diode, LED) display device, a cathode ray tube (cathode ray tube, CRT) display device, a projector (projector), or the like. The input device 1706 communicates with the processor 1701, and may receive a user input in a plurality of manners. For example, the input device 1706 may be a mouse, a keyboard, a touchscreen device, or a sensor device.

In some embodiments, in terms of hardware implementation, a person skilled in the art may figure out that the communication apparatus 150 shown in FIG. 15 may be in a form of the communication apparatus 1700 shown in FIG. 17.

In an example, the processor 1701 in the communication apparatus 1700 shown in FIG. 17 may invoke computer-executable instructions stored in the memory 1703, to implement the function/implementation process of the processing module 1501 in FIG. 15. The communication interface 1704 in the communication apparatus 1700 shown in FIG. 17 may implement the function/implementation process of the transceiver module 1502 in FIG. 15.

It should be noted that the structure shown in FIG. 17 does not constitute a specific limitation on the first communication apparatus or the second communication apparatus. For example, in some other embodiments of this application, the first communication apparatus or the second communication apparatus may include more or fewer components than those shown in the figure, or some components may be combined, or some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, the unit division is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, that is, may be located in one position, or may be distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement the foregoing embodiments, the foregoing embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to this application without departing from the scope of this application. Correspondingly, this specification and the accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the scope of this application. In this way, this application is intended to cover these modifications and variations of this application provided that the modifications and variations fall within the scope of the claims of this application and their equivalent technologies.

## Claims

1. A communication method, wherein the method comprises:
determining a first value and a first index, wherein the first value belongs to a value set, the first index belongs to an index set associated with the first value; and the first value is used to determine a length of a first sequence or a channel quantity of the first sequence, the first index is used to determine a start position of the first sequence in a second sequence, and the second sequence comprises the first sequence; and
sending or receiving a first signal, wherein the first signal is generated based on the first sequence.

2. The method according to claim 1, wherein the first value is the length of the first sequence, the value set is a length set, an index set associated with a value in the value set is an element index set, and the first value is less than or equal to a length of the second sequence; or
the first value is the channel quantity of the first sequence, the value set is a channel quantity set of a multi-channel sequence, an index set associated with a value in the value set is a channel index set of the multi-channel sequence, and the first value is less than or equal to a channel quantity of the second sequence.

3. The method according to claim 2, wherein the multi-channel sequence comprises a plurality of sequences, and a correlation of the multi-channel sequence is a superposition of correlations performed separately on the plurality of sequences; and
a channel quantity of the multi-channel sequence is a quantity of sequences comprised in the multi-channel sequence, and/or the channel quantity of the multi-channel sequence is a quantity of segments for performing correlation on the multi-channel sequence.

4. The method according to any one of claims 1 to 3, wherein the value set comprises a base value, each value in the value set is an integer multiple of the base value; and/or each index in the index set is a non-negative integer multiple of the base value; and the base value is a positive integer.

5. The method according to any one of claims 1 to 4, wherein the value set and the index set associated with the value in the value set meet at least one of the following:
there is no intersection between index sets associated with different values in the value set;
an element in the index set associated with the value in the value set comprises *Cᵢ* × *Xᵢ*, wherein *Xᵢ* is a sequence length or a channel quantity indicated by an *i*^{th} element in the value set, ${C}_{i} = 0 , 1 , … , \left⌊\frac{X}{{X}_{i}}\right⌋ - 1$, *X* is the length of the second sequence or the channel quantity of the second sequence, *i* = 1,2 ... , *N*, *N* is a total quantity of values comprised in the value set, and └ ┘ represents rounding down; or
the value set comprises the base value and a second value, there is no intersection between an index set associated with the second value and an index set associated with the base value, and the base value is a positive integer.

6. The method according to any one of claims 1 to 5, wherein the first value is further used to determine a length of a first resource, and the first index is further used to determine a start position of the first resource; and
the sending or receiving the first signal comprises:
sending or receiving the first signal on the first resource.

7. The method according to claim 6, wherein a quantity of frequency domain resource units comprised in the first resource is the first value.

8. The method according to claim 6 or 7, wherein an index of a starting frequency domain resource unit of the first resource is the first index; or
an index of a starting frequency domain resource unit of the first resource is a product of the first index and a comb size, and the comb size is a positive integer greater than 1.

9. The method according to any one of claims 1 to 8, wherein the length of the first sequence is the first value; and an index of a 1^{st} element of the first sequence in the second sequence is the first index.

10. The method according to claim 6, wherein a quantity of time units comprised in the first resource is the first value.

11. The method according to claim 6 or 10, wherein an index of a starting time unit of the first resource satisfies: $P ′ = t%K$ wherein *t* is the index of the starting time unit of the first resource, *K* is the channel quantity of the second sequence, *P'* is the first index, and % represents a modulo operation.

12. The method according to claim 6, wherein a quantity of frequency domain resource units comprised in the first resource is a product of the first value and the length of the second sequence, and the length of the second sequence is a length of any channel sequence comprised in the second sequence.

13. The method according to claim 6 or 12, wherein an index of a starting frequency domain resource unit of the first resource is a product of the first index and the length of the second sequence; or
an index of a starting frequency domain resource unit of the first resource is a product of the first index, the length of the second sequence, and a comb size, and the comb size is a positive integer greater than 1.

14. The method according to any one of claims 1 to 6 and 10 to 13, wherein the channel quantity of the first sequence is the first value; and a channel index of a 1^{st} channel sequence of the first sequence in the second sequence is the first index.

15. The method according to any one of claims 1 to 14, wherein the method further comprises: receiving first information, wherein the first information indicates at least one of the following:
the value set, the index set associated with the value in the value set, the second sequence, or a sequence set, wherein the second sequence belongs to the sequence set.

16. The method according to any one of claims 1 to 15, wherein the method further comprises: receiving second information, wherein the second information indicates the first value and/or the first index.

17. The method according to claim 16, wherein the second information comprises the first value and/or the first index.

18. The method according to claim 16, wherein the second information comprises an index of the first value in the value set, and/or an index of the first index in the index set associated with the first value.

19. A communication apparatus, wherein the communication apparatus comprises a processor, and the processor is configured to run a computer program or instructions, to cause the communication apparatus to perform the method according to any one of claims 1 to 18.

20. A chip or a chip system, wherein the chip or the chip system comprises a processor, the processor is coupled to a memory, the memory is configured to store a program or instructions, and when the program or the instructions are executed by the processor, the method according to any one of claims 1 to 18 is performed.

21. A computer-readable storage medium, wherein the computer-readable storage medium stores computer instructions or a program; and when the computer instructions or the program is run on a computer, the method according to any one of claims 1 to 18 is performed.

22. A computer program product, wherein the computer program product comprises computer instructions; and when some or all of the computer instructions are run on a computer, the method according to any one of claims 1 to 18 is performed.
